(19) Europäisches Patentamt
European Patent Office
Office européen des brevets

(11) **EP 3 922 929 B1**

(12) **EUROPÄISCHE PATENTSCHRIFT**

(45) Veröffentlichungstag und Bekanntmachung des Hinweises auf die Patenterteilung:
**23.08.2023   Patentblatt 2023/34**

(21) Anmeldenummer: **21177557.2**

(22) Anmeldetag: **03.06.2021**

(51) Internationale Patentklassifikation (IPC):
**F25B 49/02** *(2006.01)*   **F25B 31/00** *(2006.01)*
**F25B 40/00** *(2006.01)*

(52) Gemeinsame Patentklassifikation (CPC):
**F25B 49/02; F25B 31/004; F25B 40/00;**
F25B 2600/2513; F25B 2700/1931;
F25B 2700/1933; F25B 2700/21151;
F25B 2700/21152; F25B 2700/21175

(54) **VERFAHREN ZUM REGELN EINER KOMPRESSIONSKÄLTEANLAGE UND KOMPRESSIONSKÄLTEANLAGE**

COMPRESSION COOLING SYSTEM AND METHOD FOR REGULATING A COMPRESSION COOLING SYSTEM

PROCÉDÉ DE RÉGULATION D'UNE INSTALLATION DE RÉFRIGÉRATION À COMPRESSION ET INSTALLATION DE RÉFRIGÉRATION À COMPRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.06.2020   DE 102020115267**

(43) Veröffentlichungstag der Anmeldung:
**15.12.2021   Patentblatt 2021/50**

(73) Patentinhaber: **Stiebel Eltron GmbH & Co. KG 37603 Holzminden (DE)**

(72) Erfinder:
• **Herrs, Martin 37671 Höxter (DE)**
• **Hildebrandt, Silvia 37671 Höxter (DE)**

(56) Entgegenhaltungen:
**EP-A1- 1 493 978       EP-A1- 3 051 235 US-A1- 2020 132 346**

EP 3 922 929 B1

**Beschreibung**

Die Erfindung betrifft ein Verfahren zum Betrieb einer Kompressionskälteanlage sowie eine zugehörige Kompressionskälteanlage mit einem Kältemittel, einem Verdampfer, einem Verdichter, einem Verflüssiger, einem Drosselorgan und einer Steuereinheit zur Erfassung einer Überhitzung des Kältemittels bei Eintritt in den Verdichter, wobei die Überhitzung als eine Differenz einer Taupunkttemperatur zu einer Temperatur des Kältemittels definiert ist, und zu einer Regelung des Drosselorgans basierend auf der Überhitzung,

Derartige Kompressionskälteanlagen, beispielsweise in Form von Wärmepumpen, mit einem Dampfkompressionssystem in welchem ein gasförmiges Kältemittel von einem mittels der Steuereinheit, die beispielsweise einen Regler aufweist, gesteuerten Verdichter von einem Niederdruck auf einen Hochdruck verdichtet wird, sind bekannt.

Das Kältemittel wird durch den Verflüssiger getrieben, in dem es eine Heizwärme an ein in einem Wärmesenkensystem befindliches Heizmedium abgibt. Eine innere Wärme wird in einem optionalen inneren Wärmeübertrager, beispielsweise in Form eines Rekuperators, zwischen dem unter dem Hochdruck vom Verflüssiger zum Expansionsventil strömenden Kältemittel und dem vom Verdampfer zum Verdichter unter dem Niederdruck strömende Kältemittel übertragen.

Das Kältemittel wird weiter in einer Hochdruckströmungsrichtung zu einem vom Regler gesteuerten Expansionsventil geführt, in dem das Kältemittel vom Hochdruck auf den Niederdruck abhängig von einem Regelwert entspannt wird. Das auf dem Niederdruck befindliche Kältemittel verdampft in dem Verdampfer bei Aufnahme von Quellwärme.

In Dokument EP 1 493 978 A1 wird eine Kühlvorrichtung offenbart, die ein temperaturempfindliches Expansionsventil als Expansionsmechanismus verwendet. In der Kühlvorrichtung ist ein Schaltventil auf der stromaufwärtigen Seite eines Verdampfers angeordnet. Das Schaltventil wird für eine Weile geschlossen, wodurch zwangsweise eine Auslassseite des Verdampfers in den Überhitzungszustand versetzt wird, um den Ventilhub des Expansionsventils zu vergrößern. Danach wird das Schaltventil geöffnet, damit flüssiges Kältemittel durch den Verdampfer strömen kann, so dass ein Nassbetrieb durchgeführt wird. Als Ergebnis einer solchen Anordnung wird Kältemaschinenöl, das sich in dem Verdampfer angesammelt hat, zurückgewonnen und zu einem Kompressionsmechanismus zurückgeführt.

Des Weiteren offenbart Dokument D1 ein Verfahren zum Regeln einer Kompressionskälteanlage gemäß dem Oberbegriff des Anspruchs 1 und eine Kompressionskälteanlage gemäß dem Oberbegriff des Anspruchs 9.

In Dokument US 2020/132346 A1 werden Systeme und Verfahren zum Spülen von Schmiermittel von einem ersten Kompressor zu einem zweiten Kompressor bereitgestellt. Ein Steuermodul empfängt einen Schmiermittelspülbefehl, schaltet den zweiten Kompressor in einen AUS-Modus, während der erste Kompressor im EIN-Modus bleibt, verhindert, dass Kühlmittel von einem Auslass des zweiten Kompressors in den ersten Kompressor strömt, und lässt komprimiertes Kühlmittel, dass von einem Auslass des ersten Kompressors abgegeben wird, in den Einlass des zweiten Kompressors strömen, so dass Schmiermittel aus dem zweiten Kompressor in den ersten Kompressor strömt.

Dokument EP 3 051 235 A1 schlägt eine Ölstandserfassungsvorrichtung vor, die an einer Kühl- und Klimaanlage zu montieren ist, wobei die Ölstandserfassungsvorrichtung dazu ausgestaltet ist, einen Ölstand von Öl zu erfassen, das sich innerhalb eines Kompressors angesammelt hat, der die Kälte- und Klimaanlage bildet. Die Ölstandserfassungsvorrichtung umfasst eine Ölstandserfassungseinheit, die an einer Außenfläche des Kompressors installiert ist und ausgestaltet ist, eine Temperatur einer Installationsposition zu erfassen, eine Sensorausgabeeinheit, die ausgestaltet ist, ein Signal zum Ändern eines Betriebszustands der Kühl- und Klimaanlage an die Kühl- und Klimaanlage auszugeben, und eine Bestimmungseinheit, die ausgestaltet ist, eine Erschöpfung des im Inneren des Kompressors angesammelten Öls basierend auf Messwerten zu bestimmen, die von der Ölstandserfassungseinheit zumindest nach einer Ausgabe des Signals von der Sensorausgabeeinheit erhalten werden.

Aus DE 101 59 892 A1 ist bei einer Kältemaschine bekannt, insbesondere bei einer Wärmepumpe, einen Rekuperator zu verwenden, womit bei niedrigen Außentemperaturen die Heizleistung auf baulich einfache Weise erhöht werden soll. Hierfür ist der Rekuperator derart dimensioniert, dass er bei niedrigen Verdampfungstemperaturen wenigstens etwa 15% der Heizleistung der Wärmepumpe vom flüssigen Kältemittel auf das gasförmige Kältemittel überträgt. Ein Einspritzventil spritzt flüssiges Kältemittel in den Verdichter, so dass die Verdichtungsendtemperatur unter 120 °C bleibt.

Eine Wärmepumpenanlage mit einem Kältemittelkreislauf ist aus DE 10 2005 061 480 B3 bekannt. Sie ist mit einem Verdichter, einem ersten Wärmeübertrager, einem Drosselorgan, einem Verdampfer und einer 4-2-Wegeventileinheit zum Umschalten zwischen einer ersten (Heizen) und einer zweiten Betriebsart (Kühlen) ausgestattet. Eine Strömungsrichtung des in dem Kältemittelkreislauf befindlichen Kältemittels kann derart umgeschaltet werden kann, dass der erste Wärmeübertrager in der ersten Betriebsart zum Verflüssigen des Kältemittels, und in der zweiten Betriebsart zum Verdampfen des Kältemittels dient, und der zweite Wärmeübertrager in der ersten Betriebsart zum Verdampfen des Kältemittels und in der zweiten Betriebsart zum Verflüssigen des Kältemittels dient, wobei der erste Wärmeübertrager im Kältemittelkreislauf so verschaltet ist, dass er in den beiden Betriebsarten Heizen und Kühlen als Gegenstrom-Wärmeübertrager arbeitet.

Im Kältemittelkreislauf, auch als Kältekreis bezeichnet, wird bauseitig Öl vorgesehen, das typischerweise bereits im Verdichter enthalten ist. Üblicherweise befindet sich hierbei ein Ölreservoir an einer tief gelegenen Position (Schwerkraft) des Verdichters. Das Öl wird beispielsweise über eine Verdränger- oder Zentrifugalpumpe an die zu schmierenden Komponenten des Verdichters gefördert und schmiert beispielsweise die Kompressionskammern.

Dabei wird das Öl im Verdichter vernebelt und mit Kältemittel in den Kältekreis gefördert. Wenn es in dem Kältekreis Stellen gibt, an denen sich das Öl abscheiden kann, wird verhindert, dass das Öl zurück zum Verdichter geführt wird. Demnach können der Ölsumpf bzw. das Ölreservoir des Verdichters leerlaufen und zur Beschädigung des Verdichters führen.

Aufgabe der Erfindung ist es, ein Regelverfahren für die eingangs genannte Kompressionskälteanlage vorzuschlagen, mit welchem ein Leerlaufen des Ölreservoirs des Verdichters wirksam verhindert wird.

Gelöst wir die Aufgabe durch die Verfahrensmerkmale des Anspruchs 1 sowie die Vorrichtungsmerkmale des Anspruchs 9.

Demnach wird gemäß einem ersten Aspekt ein Verfahren zum Regeln einer Kompressionskälteanlage vorgeschlagen mit

- einem Kältekreis, mit

  - einem Kältemittel,
  - einem Verdampfer,
  - einem Verdichter,
  - einem Verflüssiger,
  - einem Drosselorgan und

- einer Steuereinheit

  a) zur Erfassung einer Überhitzung des Kältemittels bei Eintritt in den Verdichter, wobei die Überhitzung als eine Differenz einer Taupunkttemperatur zu einer Temperatur des Kältemittels definiert ist,
  b) zur Regelung des Drosselorgans basierend auf der Überhitzung, und
  c) zur Überwachung und Steuerung einer Ölrückführung zu dem Verdichter, wobei das Verfahren die folgenden Schritte umfasst:

- Bestimmen einer Ölwurfrate des Verdichters in den Kältekreis als Funktion wenigstens einer Drehzahl des Verdichters,
- Bestimmen einer Ölrückführrate aus dem Kältekreis als Funktion wenigstens einer Prozessgröße des Kältekreises, wobei die Prozessgrößen ausgewählt aus der Liste enthaltend: Niederdruck, Hochdruck, Drehzahl des Verdichters, Überhitzung des Kältemittels,
- Bewertung eines Ölstandes aus Ölwurfrate, Ölrückführrate und Betriebsart der Kompressionskälteanlage, und
- Durchführen einer Ölrückführsequenz in dem Fall, in dem der bewertete Ölstand in einem für den Betrieb des Verdichters kritischen Bereich liegt.

Der Erfindung liegt somit die Erkenntnis zugrunde, dass es bestimmte Betriebszustände der Kompressionskälteanlage gibt, bei der die Ölwurfrate die Ölrückführrate übersteigt, so dass die Gefahr des Trockenlaufens des Verdichters und damit der Beschädigung besteht.

Die Parameter, die einen Einfluss auf die Ölwurfrate haben, sind andere, als die Parameter, die einen Einfluss auf die Ölrückführrate haben. Hierbei hat sich herausgestellt, dass die Drehzahl des Verdichters den größten Einfluss auf die Ölwurfrate hat.

Erfindungsgemäß wird auch dann, wenn festgestellt wird, dass der Ölstand kritisch ist, ein sicherer Betrieb gewährleistet, da gegebenenfalls eine Ölrückführsequenz durchgeführt wird.

Für die Ölrückführrate sind andere Einflussgrößen relevant. Es gibt Bereiche, in denen sich Öl im Kältemittel löst und anders herum. In all den Bereichen bzw. Arbeitspunkten, in denen das Kältemittel als reines (überhitztes) Gas vorliegt, findet im Wesentlichen keine Lösung statt. Das Öl wird durch Scherkräfte mitgetrieben. In den Bereichen, in denen das Kältemittel als Flüssigkeit vorliegt, entsteht ein Gemisch aus Kältemittel und Öl.

In den Rohren, in denen das Kältemittel gasförmig transportiert wird, ist die Strömungsgeschwindigkeit so hoch, dass das Öl durch die Scherströmung mitgenommen wird, auch vertikal gegen die Schwerkraft.

Problematisch ist in diesem Zusammenhang der Verdampfer bzw. sämtliche Wärmeübertrager, die ein signifikantes Innenvolumen aufweisen, so dass sich Öl dort ansammeln und nicht zu dem Verdichter zurückgeführt werden kann. Insbesondere bei Plattenwärmeübertragern ist die Strömungsrichtung des Kältemittels in der Regel gegen die Erdanziehungskraft, damit das eingespeiste, nasse Kältemittel in dem im Gegenstrom betriebenen Wärmeübertrager verdampft wird und damit die Dichte von unten nach oben abnimmt, um den Gegenstrom zu gewährleisten.

Komponenten des Kältekreises, in denen sich eine kritische Menge an Öl ansammeln kann, werden nachfolgend auch als ölkritische Komponenten bezeichnet.

Öl, das im Nassdampf noch gelöst ist, muss gegen die Schwerkraft nach oben steigen, was erfolgt, solange noch Tröpfchen im Nassdampf vorhanden sind. Ohne Tröpfchen ist kein Öltransport gegen die Schwerkraft, das heißt als Öl - Lösung im Kältemittel-Nassdampf, mehr möglich.

Allerdings gibt es im Betrieb eines Kältekreises auch Arbeitspunkte, in welchen das aus dem Verdampfer austretende Kältemittel durch Regler - Einfluss so konditioniert wird, dass kein Nassdampf vorliegt. In dieser Gasphase müssen die Scherkräfte reichen, um das Öl bis zum Austritt aus dem Verdampfer zu führen. Dieser Öltransport ist nicht in jedem Arbeitspunkt gewährleistet. Arbeitspunkte mit geringer Strömungsgeschwindigkeit, besonders Kleinlastbereiche, oder hoher Überhitzung sind besonders anfällig.

Hierbei kann ein Kältemittelmassenstrom aus dem Niederdruck, dem Hochdruck und der Drehzahl des Verdichters berechnet werden, wobei dann auf die für die Ölrückführrate relevante Strömungsgeschwindigkeit geschlossen werden kann.

In einem Fall, in dem der Kältekreis einen internen Wärmeübertrager, wie einen Rekuperator, enthält, wird bei Verdichterstart die Überhitzung des Verdampfers auf eine Überhitzung größer 0 K geregelt. Insbesondere bei kleinen Temperaturdifferenzen zwischen den Medientemperaturen der Wärmequellen- und der Wärmesenken-Seite wird die Überhitzung des Verdampfers in diesem Fall teilweise auf Werte größer 10 K geregelt, damit nach Durchtritt des Kältemittels durch die Niederdruckseite des internen Wärmeübertragers am Verdichtereintritt die vom Hersteller geforderte Mindestüberhitzung erzielt wird.

Ein relevanter Parameter für die Ölrückführrate ist also die Überhitzung beim Austritt des Kältemittels aus der ölkritischen Komponente. Die Überhitzung kann direkt an der relevanten Stelle durch Messungen bestimmt werden oder, beispielsweise wenn zusätzlich ein innerer Wärmeübertrager vorgesehen ist, aus weiteren Prozessgrößen berechnet werden.

Es hat sich ferner herausgestellt, dass Arbeitspunkte vorliegen, in denen überhaupt kein Öl zurückgeführt wird, was beispielsweise mittels eines Schauglases nachweisbar ist. Dann, wenn Öl zurückgeführt wird, ist die Ölrückführrate regelmäßig größer als die Ölauswurfrate, so dass hinreichend Öl zurückgeführt wird. In diesem Fall ist es also ausreichend, zu bestimmen, dass Öl zurückgeführt wird.

Die Ölrückführrate ist für bestimmte Konstellationen der Drehzahl des Verdichters und der Überhitzung, gegebenenfalls für weitere Parameter, messbar bzw. bestimmbar und kann als Tabelle oder Funktion hinterlegt sein. Wenn kein Öl zurückgeführt wird, wird vorzugsweise die Zeit in einem reinen Auswurfbetrieb bestimmt und dann, wenn die Ölmenge im Verdichter einen gewissen Wert unterschreitet, die Ölrückführsequenz für eine bestimmte Zeit angesteuert. Vorzugsweise umfasst die Ölrückführsequenz wenigstens eines aus einer zeitlich begrenzten Erhöhung eines Sollwertes einer Drehzahl des Verdichters und einer zeitlich begrenzten Reduzierung eines Sollwertes der Überhitzung des Kältemittels bei Austritt aus einer ölkritischen Komponente des Kältekreises.

Die Überhitzung des Kältemittels kann bei Eintritt in den Verdichter bestimmt werden und der Wert auf den Austritt des Kältemittels aus der ölkritischen Komponente, insbesondere Verdampfer und/oder interner Wärmeübertrager, zurückgerechnet werden. Alternativ kann die Überhitzung auch unmittelbar an der relevanten Stelle des Kältekreises durch Messungen bzw. Sensoren bestimmbar sein.

Neben dem Verdampfer und dem inneren Wärmeübertrager können Rohrleitungen insbesondere im Niederdruckpfad, die entgegen der Gravitation verlaufen, ein hinreichendes Volumen aufweisen, um eine relevante Ölmenge aufzunehmen. Beispielsweise liegt die Ölmenge des Verdichters im Bereich von 100 ml bis 2000 ml, insbesondere im Bereich von 500 ml bis 1000 ml.

Ölkitische Komponenten weisen vorzugsweise ein kältekreisseitiges Innenvolumen von mindestens 50% des Ölvorrats des Verdichters auf.

Vorzugsweise erfolgt die zeitlich begrenzte Reduzierung des Sollwertes der Überhitzung des Kältemittels bei Austritt aus der ölkritischen Komponente derart, dass das Kältemittel im Nassdampfgebiet liegt.

Vorzugsweise erfolgt die zeitlich begrenzte Reduzierung des Sollwertes der Überhitzung des Kältemittels derart, dass das Drosselorgan geöffnet wird.

Die Öffnung des Drosselorgans führt rasch dazu, dass nicht mehr sämtliches Kältemittel überhitzt werden kann und demnach jedenfalls in flüssiger Form den Öltransport zurück zum Verdichter unterstützt.

Vorzugsweise umfasst die Ölrückführsequenz ein Erhöhen eines Verhältnisses zwischen einem Öffnungsgrad des Drosselorgans und einer Drehzahl des Verdichters. Dies kann beispielsweise dadurch erreicht werden, dass der Öffnungsgrad des Drosselorgans bei Beibehaltung der Drehzahl des Verdichters, beispielsweise auf einem Sockelwert, oder sogar einer Absenkung der Drehzahl des Verdichters erhöht wird. Auch kann sowohl der Öffnungsgrad des Drosselorgans als auch die Drehzahl des Verdichters erhöht werden, wobei dann eine verhältnismäßig höhere Erhöhung des Öffnungsgrades des Drosselorgans als die Erhöhung der Drehzahl im Vergleich zu dem gleichen Betriebspunkt des Normalbetriebs erfolgt .

Zur Vermeidung einer Ölrückführsequenz kann die Drehzahl des Verdichters vorbeugend, vorzugsweise bei Überschreitung eines Öffnungsgrades des Drosselorgans, das aufgrund der Überhitzungsregelung nahe der maximalen Öffnung ist, auf Werte begrenzt werden, welche eine Überhitzungsregelung auf Basis des Überhitzungs-Sollwertes zulässt.

Die Öffnung des Drosselorgans muss demnach so gestaltet sein, dass die Ziel-überhitzung ausgeregelt werden kann, ist der Öffnungsgrad zu gering, wird von dem Verdichter mehr Kältemittel gefördert, als das Drosselorgan durchlässt, so dass der Niederdruckbereich des Kältekreises leergesaugt wird, sich ein Gleichgewicht auf einem niedrigeren Druckniveau einstellt und eine höhere Überhitzung folgt. Kann das Drosselorgan trotz vollständiger Öffnung nicht hinreichend Kältemittel transportieren, kann der Verdichter den Verdampfer leersaugen, was schädlich ist, da das Öl nicht mehr richtig transportiert werden kann. In diesem Fall ist die Verdichterdrehzahl zu reduzieren, damit das Drosselorgan hinreichend Kältemittel durchlassen kann.

Erfindungsgemäß erfolgt die Bestimmung der Ölwurfrate des Verdichters in den Kältekreis als Funktion wenigstens einer Drehzahl des Verdichters sowie eines Niederdrucks und eines Hochdrucks im Kältekreis.

Hierbei hat sich gezeigt, dass der Wert des Niederdruckes und/oder des Hochdruckes mit linearem oder noch geringerem Einfluss in die Ölwurfrate eingehen, das heißt, dass die Potenz mit dem diese Parameter in die Ölwurfrate eingehen kleiner gleich 1 ist. Demgegenüber hat die Drehzahl des Verdichters einen deutlich grö-ßeren Einfluss, der in etwa der dritten Potenz der Drehzahl des Verdichters entspricht.

Es hat sich demnach als besonders vorteilhaft herausgestellt, die Ölwurfrate als Funktion der Drehzahl des Verdichters zu beschreiben, wobei ab einem bestimmten Schwellwert der Drehzahl des Verdichters ein signifikanter Ölwurf erfolgt, der mit der Drehzahl des Verdichters ansteigt.

Erfindungsgemäß umfasst die Betriebsart der Kompressionskälteanlage eine Betriebsart mit eingeschaltetem Verdichter. Nur dann, wenn der Kältekreis im Betrieb und der Verdichter eingeschaltet ist, kommt es zu einem Ölauswurf in den Kältekreis.

Gemäß einem weiteren Aspekt wird die Aufgabe erfindungsgemäß durch eine Kompressionskälteanlage mit

- einem Kältemittel,
- einem Verdampfer,
- einem Verdichter,
- einem Verflüssiger,
- einem Drosselorgan und
- einer Steuereinheit

a) zur Erfassung einer Überhitzung des Kältemittels bei Eintritt in den Verdichter, wobei die Überhitzung als eine Differenz einer Taupunkttemperatur zu einer Temperatur des Kältemittels definiert ist,
b) zur Regelung des Drosselorgans basierend auf der Überhitzung, und
c) zur Überwachung und Steuerung einer Ölrückführung zu dem Verdichter, gelöst. Die Steuereinheit ist dazu ausgebildet:

- eine Ölwurfrate des Verdichters in den Kältekreis als Funktion wenigstens einer Drehzahl des Verdichters zu bestimmen,
- eine Ölrückführrate aus dem Kältekreis als Funktion wenigstens einer Prozessgröße des Kältekreises zu bestimmen, wobei die Prozessgrößen ausgewählt aus der Liste enthaltend: Niederdruck, Hochdruck, Drehzahl des Verdichters, Überhitzung des Kältemittels,
- einen Ölstand aus Ölwurfrate, Ölrückführrate und Betriebsart der Kompressionskälteanlage zu bewerten, und
- eine Ölrückführsequenz in dem Fall, in dem der bewertete Ölstand in einem für den Betrieb des Verdichters kritischen Bereich liegt, durchzuführen.

Die erfindungsgemäße Kompressionskälteanlage ermöglicht das Erreichen der gleichen Vorteile wie das erfindungsgemäße Verfahren. Ebenso ist eine Kombination mit sämtlichen als bevorzugt ausgeführten Ausgestaltungen des Verfahrens mit Vorteil möglich.

Vorzugsweise weist das Kältemittel einen Temperaturglide auf, wobei das Kältemittel insbesondere R454C aufweist oder daraus besteht.

Gemäß einem weiteren Aspekt wird eine Wärmepumpe, insbesondere eine im Inneren eines Gebäudes aufgestellte Wärmepumpe, mit einer erfindungsgemäßen Kompressionskälteanlage vorgeschlagen.

Die Figuren zeigen ein Ausführungsbeispiel:

Fig. 1    Wärmepumpe 100 mit einem Dampfkompressionskreislauf 200

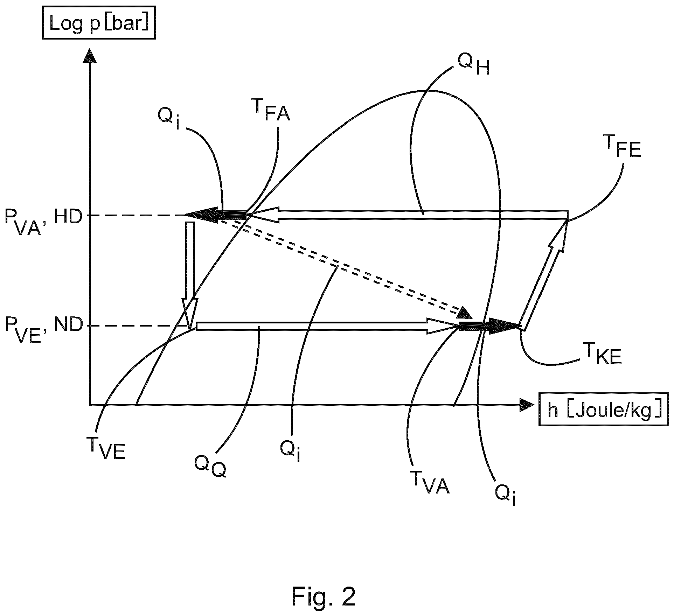

Fig. 2    log p / h - Diagramm des Dampfkompressionsprozesses mit Rekuperator 250

Fig. 3    schematisch und exemplarisch ein Flussdiagramm eines Verfahrens und

Fig. 4    Ölwurfrate in Abhängigkeit der Verdichterdrehzahl.

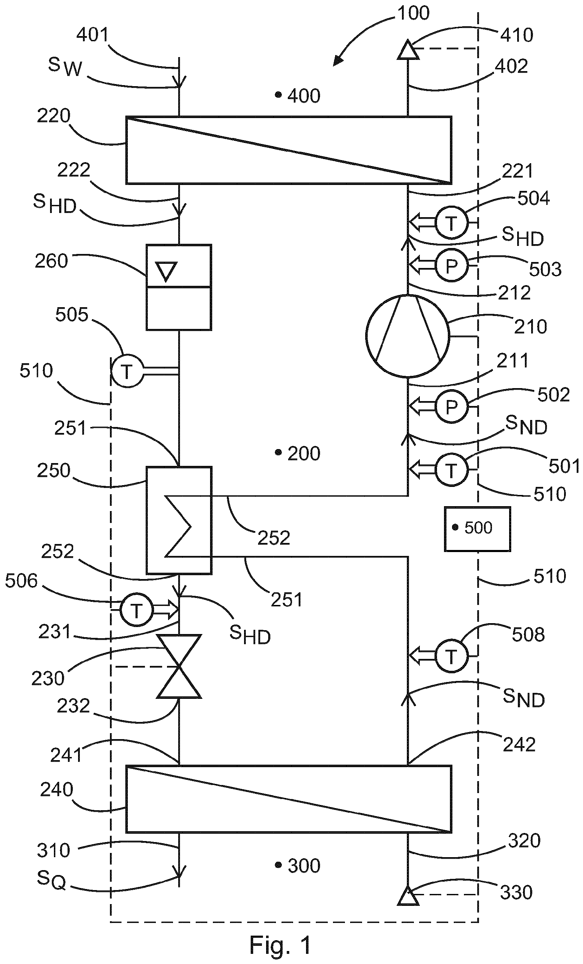

Fig. 1 zeigt schematisch und exemplarisch eine Wärmepumpe 100. Die Wärmepumpe 100 besteht im Wesentlichen aus einem eine Kompressionskälteanlage bildenden Dampfkompressionssystem 200, welches folgende Komponenten enthält:

- Einen Verdichter 210 zum Verdichten des überhitzten Kältemittels,
- einen Verflüssiger 220, mit einem kältemittelseitigem Verflüssigereintritt 221 und einem Verflüssigeraustritt 222 zur Übertragung von Wärmeenergie $Q_H$ aus dem Dampfkompressionssystem 200 an ein Heizmedium eines Heizsystems 400, mit einem Heizmediumeintritt 401, einem Heizmediumaustritt 402 und einer Heizmediumpumpe 410, zu einer Gebäudeheizung oder ein System zur Warmwassererhitzung,
- vorteilhaft einen Kältemittelsammler 260, welcher als Kältemittelreservoir zum Ausgleich von betriebsbedingungsabhängig unterschiedlich hohen Kältemittelmengenbedarfen verwendet wird,
- ein als Expansionsventil ausgebildetes Drosselorgan 230 zum Expandieren des Kältemittels,
- einen Verdampfer 240, mit einem Verdampfereinlass 241, zur Übertragung von Quellenenergie $Q_Q$ aus einem Wärmequellensystem 300, mit einem Wärmequelleinlass 320 und einem Wärmequellauslass 310, wobei das Wärmequellsystem 300 insbesondere ein Solesystem sein kann, welches Wärmeenergie $Q_Q$ aus dem Erdreich aufnimmt oder ein Luftsystem, welches Wärmeenergie $Q_Q$ aus der Umgebungsluft aufnimmt und an das Dampfkompressionssystem 200 abgibt oder eine beliebige andere Wärmequelle,
- optional einen Rekuperator als Beispiel eines internen Wärmeübertragers 250, welcher dazu bestimmt ist, innere Wärmeenergie $Q_i$ zwischen dem vom Verflüssiger 220 zum Expansionsventil 230 strömenden Kältemittel auf das vom Verdampfer 240 zum Verdichter 210 strömende Kältemittel zu übertragen und
- ein Kältemittel, insbesondere ein Kältemittelgemisch aus wenigsten zwei Stoffen oder zwei Kältemitteln welches in einer Strömungsrichtung $S_{HD}$ und $S_{ND}$ durch den Dampfkompressionskreis 200 strömt, wobei im Dampfkompressionskreislauf 200 Kältemitteldampf durch den Verdichter 210 auf einen Hochdruck HD gebracht wird und zu einem Verflüssiger 220 geführt ist, wobei ein Hochdruckpfad mit der Hochdruckströmungsrichtung $S_{HD}$ vom Verdichter 210 bis zum Expansionsventil 230 gebildet ist. Nach dem Expansionsventil 230 bis zum Verdichter 210 ist ein Niederdruckpfad mit einer Niederdruckströmungsrichtung $S_{ND}$ des Kältemittels gebildet, in dem der Verdampfer 240 liegt.

Die folgend aufgelisteten Aktoren sind vorteilhaft zumindest teilweise mit dem Regler über eine Datenverbindung 510, die per Kabel, Funk oder andere Technologien erfolgen kann, verbunden: Verdichter 210, Heizmediumpumpe 410, Solepumpe 330, Expansionsventil 230, Verdichtereintrittstemperatursensor 501, Niederdrucksensor 502, Hochdrucksensor 503, Heißgastemperatursensor 504, Rekuperatoreintrittstemperatursensor 505, Rekuperatoraustrittstemperatursensor 506 und/oder Verdampferaustrittstemperatursensor 508. Zusätzlich oder alternativ kann ein in der Fig. 1 nicht gezeigter Verdampfereintrittstemperatursensor die Temperatur am Verdampfereinlass 241 bestimmen.

In dem in Fig. 1 gezeigten Beispiel ist die Wärmepumpe 100 als Sole-Wärmepumpe gezeigt. Natürlich sind analoge Betrachtungen und Vorteile mit Luft-/Wasser-Wärmepumpen erreichbar. Insbesondere bei Luft-Wärmepumpen ist anstelle des Solekreises mit Solepumpe 330 ein Ventilator/Lüfter als Wärmequelle angeordnet.

Der Verdichter 210 dient zur Kompression des überhitzten Kältemittels von einem Eintrittsanschluss 211 auf einen Verdichteraustrittsdruck $P_{Va}$ bei einer Verdichteraustrittstemperatur entsprechend der Heißgastemperatur am Verdichteraustritt 212. Der Verdichter 210 enthält üblicher Weise eine Antriebseinheit mit einem Elektromotor, eine Kompressionseinheit und vorteilhaft kann der Elektromotor drehzahlvariabel betrieben werden. Die Kompressionseinheit kann als Rollkolbeneinheit, Scrolleinheit oder anders ausgeführt sein. Am Verdichteraustritt 212 ist das komprimierte überhitzte Kältemittel beim Verdichteraustrittsdruck $P_{Va}$ auf einer höheren Drucklage, insbesondere einem Hochdruck HD, als am Eintrittsanschluss 211 mit einem Verdichtereintrittsdruck $P_{Ve}$, insbesondere einem Niederdruck ND, bei einer Verdichter Eintrittstemperatur $T_{VE}$, was den Zustand der Kältemitteltemperatur am Eintrittsanschluss 211 bei Eintritt in eine Kompressionskammer beschreibt.

Im Verflüssiger 220 erfolgt die Übertragung von Wärmeenergie $Q_H$ vom Kältemittel des Dampfkompressionssystem 200 an ein Heizmedium des Wärmesenkensystems 400. Zunächst findet im Verflüssigter 220 die Enthitzung des Kältemittels statt, wobei überhitzter Kältemitteldampf durch eine Temperaturreduzierung einen Teil seiner Wärmeenergie an das Heizmedium des Wärmesenkensystems 400 überträgt.

Nach der Enthitzung des Kältemitteldampfes erfolgt vorteilhaft im Verflüssiger 220 eine weitere Wärmeübertragung $Q_H$ durch Kondensation des Kältemittels beim Phasenübergang von der Gasphase des Kältemittels auf die Flüssigphase des Kältemittels. Dabei wird weitere Wärme $Q_H$ vom Kältemittel aus dem Dampfkompressionssystem 200 an das Heizmedium des Wärmesenkensystems 400 übertragen.

Der sich im Verflüssiger 220 einstellende Hochdruck HD des Kältemittels korrespondiert im Betrieb des Verdichters 210 in etwa mit einem Kondensationsdruck des Kältemittels bei einer Heizmediumtemperatur $T_{WS}$ im Wärmesenkensystem.

Das Heizmedium, insbesondere Wasser, wird mittels einer Heizmediumpumpe 410 durch das Wärmesenkensystem 400 in einer Richtung SW durch den Verflüssiger 220 gefördert, dabei wird die Wärmeenergie $Q_H$ vom Kältemittel auf das Heizmedium übertragen.

Im nachfolgenden Sammler 260 wird aus dem Verflüssiger 220 austretendes Kältemittel gespeichert, welches abhängig vom Betriebspunkt des Dampfkompressionskreises 200 nicht in das zirkulierende Kältemittel eingespeist werden soll. Wird aus dem Verflüssiger 220 mehr Kältemittel eingespeist, als durch das Expansionsventil 230 weitergeleitet wird, füllt sich der Sammler 260, anderenfalls wird er leerer oder entleert.

Im nachfolgenden Rekuperator 250, der auch als interner Wärmeübertrager bezeichnet werden kann, wird interne Wärmeenergie $Q_i$ vom unter dem Hochdruck HD stehenden Kältemittel, welches vom Verflüssiger 220 zum Expansionsventil 230 in einer Hochdruck-Strömungsrichtung $S_{HD}$ strömt, auf das unter dem Niederdruck ND strömende Kältemittel übertragen, welches vom Verdampfer zum Verdichter in einer Niederdruckströmungsrichtung $S_{ND}$ strömt, übertragen. Dabei wird das vom Verflüssiger zum Expansionsventil 230 strömende Kältemittel in vorteilhafter Weise unterkühlt.

Zunächst strömt das Kältemittel durch einen Expansionsventileintritt 231 in das Expansionsventil ein. Im Expansionsventil 230 erfolgt eine Drosselung des Kältemitteldruckes vom Hochdruck HD auf den Niederdruck ND, indem das Kältemittel vorteilhaft eine Düsenanordnung oder Drossel mit einem vorteilhaft variablen Öffnungsquerschnitt passiert, wobei der Niederdruck vorteilhaft in etwa einem Saugdruck des Verdichters 210 entspricht. Anstelle eines Expansionsventils 230 kann auch eine andere beliebige Druckminderungseinrichtung eingesetzt sein. Vorteilhaft sind Druckminderungsrohre, Turbinen oder andere Entspannungsvorrichtungen.

Ein Öffnungsgrad des Expansionsventils 230 wird durch einen Elektromotor, der üblicherweise als Schrittmotor ausgeführt ist eingestellt, welcher durch die Steuereinheit oder Regelung 500 gesteuert wird. Dabei wird der Niederdruck ND beim Expansionsventilaustritt 232 des Kältemittels aus dem Expansionsventil 230 so gesteuert, dass der sich einstellende Niederdruck ND des Kältemittels im Betrieb des Verdichters 210 in etwa mit dem Verdampfungsdruck des Kältemittels mit der Wärmequellenmedientemperatur $T_{WQ}$ korrespondiert. Vorteilhaft wird die Verdampfungstemperatur des Kältemittels wenige Kelvin unterhalb der Wärmequellenmedientemperatur $T_{WQ}$ liegen, damit die Temperaturdifferenz eine Wärmeübertragung treibt.

Im Verdampfer erfolgt eine Übertragung von Verdampfungswärmeenergie Qv vom Wärmequellenfluid des Wärmequellensystems 300, welches ein Solesystem, ein Erdwärmesystem zur Nutzung von Wärmeenergie $Q_Q$ aus dem Erdreich, ein Luftsystem zur Nutzung von Energie $Q_Q$ aus der Umgebungsluft oder eine andere Wärmequelle sein, die die Quellenergie $Q_Q$ an das Dampfkompressionssystem 200 abgibt.

Das in den Verdampfer 240 einströmende Kältemittel reduziert beim Durchströmen des Verdampfers 240 durch Wärmeaufnahme $Q_Q$ seinen Nassdampfanteil und verlässt den Verdampfer 240 vorteilhaft mit einem geringen Nassdampfanteil oder vorteilhaft auch als überhitztes gasförmiges Kältemittel. Das Wärmequellenmedium wird mittels einer Solepumpe 330 bei Sole - Wasser-Wärmepumpen oder einem Außenluftventilator bei Luft/Wasser-Wärmepumpen durch den Wärmequellenmedienpfad des Verdampfers 240 gefördert, wobei beim Durchströmen des Verdampfers dem Wärmequellenmedium die Wärmeenergie $Q_Q$ entzogen wird.

Im Rekuperator 250 wird Wärmeenergie $Q_i$ zwischen dem vom Verflüssiger 220 zum Expansionsventil 230 strömenden Kältemittel auf das vom Verdampfer 240 zum Verdichter 210 strömende Kältemittel übertragen, wobei das vom Verdampfer 240 zum Verdichter 210 strömende Kältemittel insbesondere weiter überhitzt.

Dieses überhitzte Kältemittel, welches mit einer Überhitzungstemperatur $T_{Ke}$ aus dem Rekuperator 250 austritt, wird zum Kältemitteleintrittsanschluss 211 des Verdichters 210 geleitet.

Der Rekuperator 250 ist im Dampfkompressionskreis 200 eingesetzt, um den Gesamt - Wirkungsgrad als Quotient aus abgegebener Heizleistung $Q_H$ und aufgenommener elektrischer Leistung $P_e$ zum Antrieb des Verdichtermotors zu erhöhen.

Zu diesem Zweck wird dem Kältemittel, welches im Verflüssiger 220 Wärmeenergie $Q_H$ auf einem wärmesenkenseitigen Temperaturniveau an das Heizmedium abgibt, im Hochdruckpfad des Rekuperators 250 durch Unterkühlung weitere Wärmeenergie $Q_i$ entzogen.

Der innere Energiezustand des Kältemittels beim Eintritt in den Verdampfer 240 ist durch diesen Wärmeentzug $Q_i$ reduziert, sodass das Kältemittel bei gleichem Verdampfungstemperaturniveau mehr Wärmeenergie $Q_Q$ aus der Wärmequelle 300 aufnehmen kann.

Anschließend wird dem Kältemittel, nach dem Verdampferaustritt 242 aus dem Verdampfer 240, im Niederdruckpfad bei Niederdruck ND und bei einer Niederdrucktemperatur entsprechend einer Verdampferaustrittstemperatur $T_{Va}$ am Eintritt in den Rekuperator 250 die im Hochdruckpfad entzogene Wärmeenergie $Q_i$ wieder zugeführt. Die Zuführung der Energie bewirkt vorteilhat eine Reduzierung des Nassdampfanteils auf einen Zustand ohne Nassdampfanteil. Die Überhitzung wird durch weitere Energiezuführung sichergestellt.

Des Weiteren sind zur Erfassung des Betriebszustandes des Dampfkompressionssystems 200 vorteilhaft folgende Sensoren angeordnet, mit denen insbesondere zur Absicherung und Optimierung der Betriebsbedingungen des Dampfkompressionssystems 200 insbesondere bei Betriebszustandsänderungen eine modellbasierte Vorsteuerung umgesetzt ist.

Einerseits erfolgt vorteilhaft mit Hilfe der durch Sensoren erfassten Prozesswerte eine Absicherungen bezüglich zulässiger Arbeitsbereiche der Komponenten wie insbesondere dem Verdichter 210, andererseits erfolgen basierend auf den Sensordaten modellbasierte Vorsteuerungen insbesondere einer Drehzahl des Verdichters 210 und/oder einem Ventilöffnungsgrad des Expansionsventils, so dass die Regler zur Ausregelung einer sich dennoch, durch die Vorsteuerung aber kleineren, Regelabweichung nur noch kleinere Korrekturen durchführen muss:

- Ein Hochdrucksensor 503 vorteilhaft zur Erfassung des Hochdrucks HD des Kältemittels am Verdichteraustritt 212 oder zwischen dem Verdichteraustritt 212 und dem Expansionsventileintritt 231,
- ein Heißgastemperatursensor 504 vorteilhaft zur Erfassung einer Heißgastemperatur $T_{HG}$ des Kältemittels am Verdichteraustritt 212, oder im Kältekreisabschnitt zwischen dem Verdichteraustritt 212 und dem Verflüssigereintritt 221,
- ein Innentemperatursensor 506 vorteilhaft zur Erfassung der Innentemperatur $T_{Ie}$ des Kältemittels zwischen dem hochdruckseitigem internen Rekuperatorauslass 252 des Kältemittels aus dem Rekuperator 250 und dem Expansionsventileitritt 231. Die Innentemperatur ist vorteilhaft auch als "Rekuperatoraustrittstemperatur Hochdruckpfad" benannt und
- vorteilhaft ein Rekuperatorinnentemperatursensor 505. Der Rekuperatorinnentemperatursensor 505 erfasst vorteilhaft Verflüssigeraustrittstemperatur $T_{FA}$ des Kältemittels in der Strömungsrichtung am Verflüssigeraustritt oder dem hochdruckseitigen Rekuperatoreintritt und daher wird vorteilhaft die Verflüssigeraustrittstemperatur $T_{FA}$ vom Rekuperatorinnentemperatursensor 505 gemessen.

Die folgenden Sensoren sind insbesondere für die Durchführung des erfindungsgemäßen Verfahrens vorteilhaft:

- Ein Niederdrucksensor 502 zur Erfassung des Niederdrucks ND des Kältemittels am Verdichtereintritt 211, oder zwischen dem Expansionsventil 230 und dem Verdichtereintritt 211,
- ein Verdampferaustrittstemperatursensor 508 zur Erfassung der Verdampferaustrittstemperatur $T_{Va}$ des Kältemittels am Verdampferaustritt 242 oder zwischen dem Verdampferaustritt 242 und dem niederdruckseitigen Eintritt des Kältemittels in den Rekuperatoreinlass 251 des Rekuperators 250 und
- ein Niederdrucktemperatursensor 501 misst vorteilhaft eine Verdichtereintrittstemperatur oder dient vorteilhaft zur Erfassung der Kältemittelniederdrucktemperatur $T_{ND}$ oder vorteilhaft einer Verdichtereintrittstemperatur $T_{KE}$ am Verdichtereintritt 211, oder zwischen dem niederdruckseitigem Rekuperatorauslass 252 des Kältemittels aus dem Rekuperator 250 und dem Verdichtereintritt 211.

Die Prozessgröße, welche einen maßgeblichen Einfluss auf den Gesamt - Wirkungsgrad des Dampfkompressionskreises 200 als Quotient zwischen der vom Dampfkompressionskreis 200 übertragenen Heizleistung $Q_H$ zu einer vom Verdichter 210 aufgenommenen elektrischen Leistung $P_e$ hat, ist die Überhitzung des Kältemittels am Verdichtereintritt 211. Zur Einhaltung zulässiger Verdichter - Betriebsbedingungen werden vorteilhaft allerdings Beschränkungen bezüglich des erlaubten Überhitzungsbereiches des Kältemittels am Verdichtereintritt eingehalten. Zu niedrige Überhitzungen gefährden insbesondere die Schmiereigenschaften des Maschinenöls, zu hohe Überhitzungen bewirken insbesondere eine zu hohe Heißgastemperatur.

Die Überhitzung beschreibt die Temperaturdifferenz zwischen der erfassten Verdichtereintrittstemperatur $T_{KE}$ des Kältemittels und der Verdampfungstemperatur des Kältemittels bei gesättigtem Dampf.

Erfindungsgemäß wird vorzugsweise die Verdichtereintrittsüberhitzung derart geregelt, dass kein Kondensat durch Taupunktunterschreitung des in der Umgebungsluft enthaltenden Wasserdampfanteils an Komponenten des Kältekreises insbesondere im Abschnitt zwischen Kältemittelaustritt des Rekuperators 252 und Verdichtereintritt 211 ausfällt. Der Kältekreisabschnitt zwischen Verdampferaustritt 242 und Rekuperatoreintritt 251 ist zwar üblicherweise kälter, weil dieser typischerweise nur ein kurzer Rohrabschnitt ist, ist eine bessere Isolierung im Vergleich zu dem Abschnitt zwischen Kältemittelaustritt des Rekuperators 252 und Verdichtereintritt 211 möglich. Beispielsweise sitzt an der Stelle des Verdichtereintritts 211 am Verdichter der Kältemittelabscheider, der geschützt werden soll. Dieser kann schlecht eingehaust werden, so dass hier die Temperatur so hochgehalten werden soll, dass nichts kondensiert. Die Problematik der Kondensation tritt auf der Hochdruckseite im Regelfall nicht auf. Auch die Passage zwischen hochdruckseitigem Rekuperatoraustritt 252 und Eintritt in das Expansionsventil 231 kühlt regelmäßig in Abhängigkeit des Betriebspunktes bei idealen Wärmeübertragungsbedingungen im Rekuperator 250 auf das Temperaturniveau des Kältemittels am Verdampferaustritt 242 ab. Da aber auch diese Passage typischerweise kurz ist und man kann sie sehr gut isolieren kann, ist auch dieser Abschnitt im Regelfall nicht problematisch. Es sollte jedoch beachtet werden, dass das erfindungsgemäße Verfahren einen Kondensatabfall grundsätzlich über den gesamten Kreislauf der Wärmepumpe verhindern kann.

Wenn - zum Zwecke eines Zahlenbeispiels - ein Verdampfungstemperaturniveau von ca. -10°C angenommen wird und die Temperatur am Soleeintritt 330 bei etwa -10°C, am Soleaustritt 310 etwa -13°C und am Verdichtereintritt 5°C beträgt, beträft die Überhitzung 15K.

Vorteilhaft sind bei vielen Anlagen Raumtemperatursensor und Raumfeuchtesensor, die eine genaue Bestimmung der Auskondensierungsbedingungen der Luft ermöglicht, bspw. Liegt bei 21°C und 60 % rel. Feuchte die Kondensationstemperatur im Bereich von 13°C. Unter diesen Bedingungen findet also, so lange die Rohrtemperatur über 13°C zuzüglich gegebenenfalls einen Puffer, bspw. 1K, keine Kondensation statt.

An dem selbstverständlich nicht einschränkenden Zahlenbeispiel festgehalten wird nun die Erzielung einer Überhitzung von 15K bei einer Verdichtereintrittstemperatur von 5°C erreicht. Diese Temperatur liegt unter den 13°C, die für die aktuellen Umgebungsbedingungen als Kondensationstemperatur des in der Umgebungsluft befindlichen Wasserdampfanteils bestimmt ist. Demnach findet Kondensation statt. Soll die Verdichtereintrittstemperatur wenigstens 14°C, d.h. Kondensationstemperatur plus Puffer, betragen, muss die Überhitzung um 9K größer werden, d.h. eine Überhitzung von 24K eingehalten werden.

Grenzwerte, insbesondere für die Überhitzung, legen arbeitspunktabhängig den zulässigen Überhitzungsbereich der Komponenten am Verdichtereintritt 211 fest. Weiterhin bestehen aber auch Abhängigkeiten zwischen der Verdichtereintrittsüberhitzung $T_{\ddot{U}E}$ und dem Gesamtwirkungsgrad des Dampfkompressionskreises 200 oder auch zwischen Verdichtereintrittsüberhitzung $dT_{\ddot{U}E}$ und einer Stabilität S eines Regelwertes R vorteilhaft bei der Ausregelung der Verdichtereintrittsüberhitzung.

Zur Berücksichtigung all dieser Anforderungen werden vorteilhaft in Abhängigkeit des Arbeitspunktes des Dampfkompressionskreises 200, die Wärmequellenmedientemperatur, die Heizmediumtemperatur, die Verdichterleistung $P_e$ und Zielwerte Z oder der Zielwert Z für eine Berechnung der Verdichtereintrittsüberhitzung $dT_{\ddot{U}E}$ herangezogen. Alternativ oder zusätzlich kann aus den vom Arbeitspunkt abhängigen Kältekreis-Messgrößen wie Wärmequellenmedientemperatur, Heizmediumtemperatur, Verdichterleistung $P_e$ und parametrierbaren, also an das Verhalten der jeweiligen Kältekreiskomponenten angepasste Koeffizienten eine Berechnung des Zielwertes Z als Vorgabewert für die Verdichtereintrittsüberhitzung $dT_{\ddot{U}E}$ durchgeführt werden. Im einfachsten Fall ist der Zielwert für die Verdichtereintrittsüberhitzung $dT_{\ddot{U}E}$ unabhängig von allen Betriebsbedingungen konstant, z.B. 10 Kelvin. Bei einer komplexeren Anpassung wird er als Funktion einer Arbeitspunktgröße, z.B. der Verdichterleistung $P_e$ variiert oder bei noch komplexerer Anpassung variiert er als Funktion mehrerer Arbeitspunktgrößen.

Es wird eine Regelabweichung der Verdichtereintrittsüberhitzung $dT_{\ddot{U}E}$ und eine Regelabweichung der Verdampferaustrittsüberhitzung $dT_{\ddot{U}A}$ miteinander gewichtet kombiniert, woraus im Regler 500 eine Gesamtregelabweichung berechnet wird, welche zur Regelung des Dampfkompressionskreises 200 eingespeist wird. Vorteilhaft präziser werden zunächst die Regelabweichungen von der Verdichtereintrittsüberhitzung $dT_{\ddot{U}E}$ und Verdampferaustrittsüberhitzung $dT_{\ddot{U}A}$ durch die Bildung der Differenzen zwischen den jeweiligen Messwerten und Zielwerten gebildet.

- Regelabweichung der Verdichtereintrittsüberhitzung $dT_{\ddot{U}E}$ = Messwert Verdichtereintrittsüberhitzung - Zielwert Verdichtereintrittsüberhitzung $Z_{T\ddot{U}E}$
- Regelabweichung der Verdampferaustrittsüberhitzung $dT_{\ddot{U}A}$ = Messwert Verdampferaustrittsüberhitzung - Zielwert Verdampferaustrittsüberhitzung $Z_{T\ddot{U}A}$

Dann wird vorteilhaft aus dem gewichteten Einfluss von der Regelabweichung der Verdichtereintrittsüberhitzung $dT_{\ddot{U}E}$ und dem gewichteten Einfluss der Regelabweichung der Verdampferaustrittsüberhitzung $dT_{\ddot{U}A}$ im Regler 500 die Gesamtregelabweichung berechnet, welche zur Regelung des Dampfkompressionskreises 200 eingespeist wird.

Beim Dampfkompressionskreis 200 passiert das Kältemittel nach der Entspannung durch das Expansionsventil 230 zwei sequenziell angeordnete Wärmeübertrager, den Verdampfer 240 und den Rekuperator 250 in welchen dem Kältemittel Wärmeenergie $Q_Q$ und $Q_i$ zugeführt wird.

Im Verdampfer 250 wird dem Kältemittel Quellwärmeenergie $Q_Q$ aus dem Wärmequellsystem 300 zugeführt. Das Temperaturniveau der zugeführten Quellwärme $Q_Q$ ist auf einem Temperaturniveau der Wärmequelle, insbesondere wie des Erdreiches oder der Außenluft.

In dem in Kältemittel Hochdruck-Strömungsrichtung $S_{HD}$ nachfolgenden Rekuperator 250 wird dem Kältemittel Wärmeenergie $Q_i$ nach Verlassen des Verflüssigers 220 entzogen. Das Temperaturniveau des Kältemittels am Austritt des Verflüssigers stellt sich in etwa auf Höhe der Rücklauftemperatur des Heizmediums ein.

Diese Verschaltung des Verdampfers 240 mit dem Rekuperator 250 in Reihe hat einen entscheidenden Einfluss auf die Übertragungsfunktion der Regelstrecke für die Regelung Verdichtereintrittsüberhitzung $dT_{\ddot{U}E}$.

Der Regelwert R ist vorteilhaft die gewichtete Verknüpfung der Regelabweichung der Verdichtereintrittsüberhitzung $dT_{\ddot{U}E}$ mit der Regelabweichung der Verdampferaustrittsüberhitzung.

Aktor-bzw. Betriebszustandsgrößen mit einem Einfluss auf den Regelwert R, insbesondere der Verdichtereintrittsüberhitzung $dT_{ÜE}$, sind im betreffenden Dampfkompressionskreis 200 die Verdichterdrehzahl und/oder den Öffnungsgrad des Expansionsventils 230, womit auch vorteilhaft der Niederdruck ND und das Verdampfungstemperaturniveau bestimmt sind.

Besonders vorteilhaft haben Aktoren Einfluss auf den Regelwert R, insbesondere auf die gewichtete Verknüpfung der Regelabweichung der Verdichtereintrittsüberhitzung mit der Regelabweichung der Verdampferaustrittsüberhitzung. Im betreffenden Dampfkompressionskreis 200 sind insbesondere der Verdichter 210 durch die Variation der Verdichterdrehzahl und das Expansionsventil 230 durch Beeinflussung des Öffnungsgrades solche Aktoren. Diese beiden Aktoren beeinflussen den Niederdruck ND und das Verdampfungstemperaturniveau.

Hierbei sind nicht alle Einflüsse gewünscht. So verändert beispielsweise eine Änderung der Verdichterdrehzahl zur Einregelung der gewünschten Heizleistung ohne weitere kompensatorische Änderungen des Öffnungsgrades des Expansionsventils den Regelwert R in unerwünschte Bereiche, sodass eine mit der Verdichterdrehzahländerung einhergehende modellbasiert unterstützte Öffnungsgradänderung des Expansionsventils zur Einregelung von R vorteilhaft, gegebenenfalls sogar erforderlich ist.

Vorteilhaft wird im Dampfkompressionskreis 200 die Verdichterdrehzahl so eingestellt, dass die vom Dampfkompressionskreis 200 an das Heizmedium übertragene Heizleistung QH dem angeforderten Zielwert Z entspricht. Zur Einhaltung dieser Vorgabe ist eine Beeinflussung der Verdichterdrehzahl zur Regelung der Verdichtereintrittsüberhitzung $dT_{ÜE}$ vorteilhaft untergeordnet oder nicht angebracht.

Vorteilhaft wird der Öffnungsgrad des Expansionsventils 230 als Stellwert für die Regelung der Verdichtereintrittsüberhitzung $dT_{ÜE}$ verwendet. Der Einfluss des Öffnungsgrades des Expansionsventils 230 auf die Verdichtereintrittsüberhitzung $dT_{ÜE}$ vollzieht sich wie folgt:

Das Expansionsventil 230 agiert als Düse mit elektromotorisch verstellbarem Düsenquerschnitt, bei welchem üblicherweise mittels eines Schrittmotors eine nadelförmige Düsennadel per Gewinde in einen Düsensitz gefahren wird.

Der Kältemitteldurchsatz durch das Expansionsventil ist bei Betrieb mit flüssigem Kältemittel am Expansionsventileintritt 231 in etwa proportional zur Quadratwurzel des Druckunterschiedes zwischen dem Expansionsventileintritt 231 und -austritt 232 multipliziert mit einem aktuellen relativen Wert des Düsenquerschnitts oder Öffnungsgrads und vorteilhaft einer vom Kältemittel - und einer Geometrie des Expansionsventils 230 abhängigen Konstante.

Da bei einer in einem Arbeitspunkt mit einer als konstant angenommenen Verdichterdrehzahl und einer als konstant angenommenen Heizmediumtemperatur Tws auch der korrespondierende Hochdruck HD des Kältemittels beim Eintritt in das Expansionsventil 230 als konstant angenommen werden kann, beeinflusst der Öffnungsgrad des Expansionsventil 230 maßgeblich nur den Niederdruck ND, also des Austrittsdruck aus dem Expansionsventil 230.

Wird der Öffnungsgrad des Expansionsventils 230 verringert, so passiert weniger Kältemittel bei konstantem Hochdruck HD und zunächst noch konstantem Niederdruck ND das Expansionsventil 230. Da der Verdichter 210 aber weiterhin zunächst den gleichen Kältemittelmassenstrom fördert, wird in Hochdruck-Strömungsrichtung $S_{HD}$ durch das Expansionsventil 230 weniger Kältemittel zugeführt, als vom Verdichter 210 abgesaugt wird.

Da es sich bei Kältemitteldampf um ein kompressibles Medium handelt, sinkt dann der Niederdruck ND auf der Niederdruckseite des Dampfkompressionskreises 200. Bei sinkendem Niederdruck ND sinkt in etwa proportional der Massenstrom von Kältemittel durch den Verdichter 210, da dessen Förderleistung sich angenähert als Rauminhalt / Zeit beschreiben lässt, bedingt durch insbesondere die Kolbenhübe, und es stellt sich ein entsprechend reduzierter Niederdruckwert ND ein, bei welchem der durch das Expansionsventil 230 zugeführte Kältemittelmassenstrom gleich dem vom Verdichter 210 abgeführten Kältemittelmassenstrom ist.

Wird der Öffnungsgrad des Expansionsventils 230 vergrößert, so passiert mehr Kältemittel bei konstantem Hochdruck HD und zunächst noch konstantem Niederdruck ND das Expansionsventil 230. Da der Verdichter 210 aber weiterhin zunächst den gleichen Kältemittelmassenstrom fördert, wird der Niederdruckseite ND des Kältekreises durch das Expansionsventil 230 mehr Kältemittel zugeführt, als vom Verdichter 210 abgesaugt wird. Da es sich beim Kältemitteldampf um ein kompressibles Medium handelt, steigt der Niederdruck ND auf der Niederdruckseite des Dampfkompressionskreises 200. Bei steigendem Niederdruck ND steigt die Massenstromförderleistung des Verdichters 210 in etwa proportional, da dessen Förderleistung sich angenähert als Rauminhalt / Zeit beschreiben lässt, und es stellt sich ein entsprechen erhöhter Niederdruck ND ein, bei welchem der durch das Expansionsventil 230 zugeführte Kältemittelmassenstrom gleich dem vom Verdichter 210 abgeführte Kältemittelmassenstrom ist.

Der Niederdruck ND wiederum beeinflusst maßgeblich die Wärmeübertragung zwischen Wärmequellenmedium und Kältemittel im Verdampfer 240. Der Wärmestrom $Q_Q$ aus dem Wärmequellsystem 300 wird zwischen dem Wärmequellmedium und dem Kältemittel mit unterschiedlicher Temperatur übertragen, wobei der Wärmestrom $Q_Q$ dabei abhängig vom der Temperaturdifferenz zwischen dem Wärmequellmedium und dem Kältemittel und dem Wärmeübergangswiderstand einer Wärmeübertragungsschicht des Verdampfers 240 ist.

Der Wärmeübergangswiderstand zwischen Wärmequellenmedienpfad des Verdampfers und Kältemittelpfad des Verdampfers ist in einem jeweiligen Dampfkompressionskreis 200 als in etwa konstant anzunehmen. Daher ist die Größe der Wärmeübertragungsleistung im Verdampfer 240 maßgeblich abhängig vom Integral der Temperaturdifferenzen aller Flächenelemente der Wärmeübertragungsschicht.

Um ein hinreichendes Maß von Wärmeenergie $Q_Q$ vom Wärmequellesystem 300 an das Kältemittel übertragen zu können, muss sichergestellt sein, dass die Temperatur des Wärmequellenmediums in möglichst allen Flächenelementen der Übertragungsschicht des Wärmeübertragers, hier des Verdampfers 240, größer ist als die Temperatur des Kältemittels am jeweiligen Flächenelement ist.

Ist der Aggregatzustand des Kältemittels beim Durchströmen des Verdampfers 240 gesättiger Dampf, so stellt sich eine Kältemitteltemperatur ein, welche durch die Sättigungsdampfkennlinie als Stoffeigenschaft des Kältemittels eine Funktion des Niederdrucks ND des Kältemittels ist. Somit lässt sich durch eine Steuerung des Niederdruckes ND oder auch eines Verdampfungsdruckes indirekt eine Steuerung der Verdampfungstemperatur des Kältemittels beim Durchströmen des Rekuperators 250 steuern.

Die Wärmeenergie $Q_Q$, welche vom Wärmequellensystem an das den Verdampfer 240 durchströmende Kältemittel übertragen wird, bewirkt eine Aggregatzustandsbeeinflussung des Kältemittels.

Der Nassdampfanteil im gesättigten Kältemitteldampf nimmt bei konstantem Niederdruck bei Wärmeübertragung an das Kältemittel ab. Bei einer unvollständigen Verdampfung ist der Nassdampfanteil und damit auch der innere Energiezustand des Kältemittels beim Austritt aus dem Wärmeübertrager eine Funktion vom:

- Nassdampfanteil bei Eintritt in den Verdampfer 240,
- Kältemittelmassenstrom,
- Übertragener Wärmeleistung $Q_Q$, und von einer
- Enthalpiedifferenz im Nassdampfgebiet beim jeweiligen Niederdruck ND, welche das Kältemittel als eine zugeordnete Funktion des Drucks aufweist.

Zur vollständigen Verdampfung erfolgt eine zusätzliche Energiezuführung im Rekuperator 250, um das Kältemittel über den Zustand gesättigten Dampfes hinaus zu überhitzen.

Mit dem Verfahren wird bei gegebenen Betriebsbedingungen des Dampfkompressionskreises 200 in Abhängigkeit der Stellgröße "Öffnungsgrad Expansionsventil 230" ein korrespondierender Kältemittelzustand beim Austritt aus dem Verdampfers 240 eingestellt.

Im eingeschwungenen Zustand ergibt sich hinsichtlich einer Regeltreckensteilheit der "isolierten" Regelstrecke "Verdampfer 240" ein Regelstreckenverhalten mit moderater Steilheit. Das Regelstreckenverhalten ist insbesondere gekennzeichnet durch Regelstreckenausgangswertes Verdampferaustrittsüberhitzung als Funktion des Regelstreckeneingangswertes Expansionsventilöffnungsgrad.

Vorteilhaft wird ein Kältemittel, insbesondere als Kältemittel ein Kältemittelgemisch verwendet, welches einen "Temperaturglide" aufweist, insbesondere wird vorteilhaft R454c verwendet. Vorteilhaft wird bei einem Kältemittelgemisch mit einem Temperaturglide, bei einer relativen Öffnungsgradänderung des Stellorgans Expansionsventil von 1 % rel. am Austritt des Kältemittels aus dem Verdampfer üblicherweise eine Überhitzungsänderung von etwa kleiner 1 K eingestellt.

Die Einstellung dieses Zustandes erfolgt vorteilhaft auch durch eine regelungstechnische Beeinflussung wenigstens einer oder mehrerer der verschiedenen folgenden Zeitkonstanten; die letztendlich die Prozessgröße Kältemittelüberhitzung am Verdampferaustritt 242 beeinflussen:

- Eine erste Zeitkonstante bewirkt vorteilhaft eine Verzögerung der mechanischen Öffnungsgradänderung des Expansionsventils 230 durch die Begrenzung der Verfahrgeschwindigkeit durch den Regler 500, der Regelwert R wird in dieser ersten Zeitkonstante Z in der Verfahrgeschwindigkeit durch einen Bremswert reduziert. Der Bremswert kann beispielsweise die reglertechnische Zykluszeit, in welcher ein Verfahrschritt des Expansionsventils 230 gesteuert wird, umfassen.
- Eine zweite Zeitkonstante wirkt durch den Regler 500 vorgegeben vorteilhaft auf eine verzögerte Einstellung eines korrespondierenden Niederdruckes bei Öffnungsgradänderungen des Expansionsventils 230 aufgrund der Kompressibilität des Kältemitteldampfes bei Niederdruck ND im Niederdruckpfad.
- Eine dritte Zeitkonstante ist vorteilhaft eine thermische Zeitkonstante der Wärmeübertragungsschicht des Verdampfers 240, wobei eine Änderung des Verdampfungsdruckes und damit der Verdampfungstemperatur eine verzögerte Temperaturänderung der Wärmeübertragungsschicht des Verdampfers, welcher oft mehrere Kilogramm Metall hat und des Wärmequellenmediums.

- Eine vierte Zeitkonstante ergibt sich vorteilhaft aus verzögerten Aggregatzustandsänderungen des Kältemittels bei Verdampfungstemperaturänderungen.
- Eine fünfte Zeitkonstante ergibt sich vorteilhaft aus dem Transport des Kältemittels durch den Verdampfer 240 mit einer endlichen Strömungsgeschwindigkeit.

Es stellt sich also vorteilhaft nach Änderung der Stellgröße "Öffnungsgrad des Expansionsventils 230" eine Verzögerung der korrespondierenden Kältemittelzustandsänderung beim Austritt aus dem Verdampferaustritt 242 ein und eine Gesamtzeitkonstante $Z_{ges}$ liegt arbeitspunktabhängig vorteilhaft im Bereich von 30 Sekunden bis etwa 5 Minuten.

Nach Durchströmung des Verdampfers 240 tritt das Kältemittel bei Niederdruck ND in den Niederdruckpfad des Rekuperators 250 ein.

Ist der Aggregatzustand des Kältemittels beim Einströmen in den Rekuperators 250 in einem üblichen Betriebsfall, also vorteilhaft entweder gesättigter Dampf mit einem geringen Dampfanteil zwischen 0 bis 20 % oder insbesondere auch vorteilhaft auch bereits überhitztes Kältemittel.

Bei vorteilhaft gesättigtem Dampf stellt sich eine Kältemitteltemperatur ein, welche durch die Sättigungsdampfkennlinie des Kältemittels eine Funktion des Kältemitteldruckes ist. Bei Eintritt von überhitztem Kältemittel wird die Kältemitteltemperatur maximal eine Größe annehmen, welche der Eintrittstemperatur des Wärmequellenmediums entspricht. In diesem Fall entspricht die Größe vorzugsweise der Eintrittstemperatur des Kältemittels in den Hochdruckpfad des Rekuperators 250, also die Temperatur des Kältemittels nach Austritt aus dem Verflüssiger 220.

Um ein hinreichendes Maß von Wärmeenergie vom Kältemittel des hochdruckseitigen Kältemittelpfad an das Kältemittel des niederdruckseitigen Kältemittelpfad im Rekuperator 250 übertragen zu können, muss sichergestellt sein, dass die Temperatur des Kältemittels des hochdruckseitigen Kältemittelpfads auf Hochdruck HD in möglichst allen Flächenelementen der Übertragungsschicht des Rekuperators 250 größer als die Temperatur des Kältemittels des niederdruckseitigen Kältemittelpfades bei Niederdruck ND am jeweiligen Flächenelement ist.

Die korrespondierenden Temperaturen des Heizsystems 400 des Dampfkompressionssystems 200 sind in einem Heizfall höher als die korrespondierenden Temperaturen der Wärmequelle wie dem Erdreich oder der Außenluft.

Die Wärmeenergie $Q_i$, welche vom Kältemittel bei Hochdruck HD des hochdruckseitigen Kältemittelpfads an das Kältemittel bei Niederdruck im niederdruckseitigen Kältemittelpfad des Rekuperators 250 übertragen wird, bewirkt eine Aggregatzustandsbeeinflussung des Kältemittels auf der Niederdruckseite. Der Nassdampfanteil des den Rekuperator 250 niederdruckseitig bei Niederdruck ND durchströmenden Kältemittels nimmt bei einer Wärmeübertragung an das Kältemittel ab und nach einer vollständigen Verdampfung erfolgt vorteilhaft eine Überhitzung des Kältemittels.

Der innere Energiezustand des Kältemittels, beim Austritt aus dem niederdruckseitigen Pfad des Rekuperators, wird vorteilhaft abhängig von einem oder mehreren der folgenden Faktoren geregelt.

- Nassdampfanteil bei Eintritt in den Rekuperator 250,
- Kältemittelmassenstrom,
- übertragene Wärmeleistung $Q_i$, womit vorteilhaft abhängig von der Temperaturdifferenz zwischen der Temperatur des Kältemittels bei Hochdruck HD im hochdruckseitigen Kältemittelpfad und der Temperatur des Kältemittels des niederdruckseitigen Kältemittelpfades bei Niederdruck ND geregelt wird, und/oder
- eine Enthalpiedifferenz im Nassdampfgebiet beim jeweiligen Niederdruck ND.

Vorteilhaft wird somit bewirkt, dass sich in Abhängigkeit der gegebenen Betriebsbedingungen des Dampfkompressionskreises 200 sowie in Abhängigkeit der Stellgröße "Öffnungsgrad Expansionsventil 230" ein korrespondierender Kältemittelzustand beim Austritt 252 aus dem Rekuperator 250 beim Niederdruck ND einstellt.

Im eingeschwungenen Zustand ergibt sich hinsichtlich Regeltreckensteilheit der "isolierten" Regelstrecke beim Niederdruck ND des Kältemittels im niederdruckseitiger Pfad des Rekuperators 250 ein Regelstreckenverhalten mit hoher Steilheit, bei in etwa gleichbleibendem inneren Energiezustand des Kältemittels beim Eintritt 251 in den niederdruckseitigen ND Pfad des Rekuperators 250. Mit einer insbesondere relativen Öffnungsgradänderung des Expansionsventil von 1 % ergibt sich eine Überhitzungsänderung am Austritt des Kältemittels aus dem Rekuperator 250 von vorteilhaft etwa 10 K oder auch über 10 K.

Gegenüber dem Rekuperator 250 erfolgt vorteilhaft eine wesentlich höhere Wärmeübertragung im Verdampfer 240 zwischen dem Quellmedium und dem Kältemittel im Verdampfer 240.

So wird im Verdampfer 240 eine wesentlich höhere Wärmeübertragung als im Rekuperator 250 umgesetzt, was auch erforderlich ist, da der Umgebung mittels Verdampfer 240 eine wesentlich größere Energie entzogen werden soll, als sie nur im Rekuperator 250 innerhalb des Kältekreises zu übertragen. Die treibende Temperaturdifferenz kann aber beispielsweise im Rekuperator zwischen 20 bis 60K betragen, während diese im Verdampfer lediglich zwischen 3 bis 10 K beträgt. Um die gewünschten Energien trotz unterschiedlicher treibender Temperaturdifferenzen übertragen zu können, wird beispielsweise die Austauscherfläche des Verdampfers ca. 5 bis 20 mal größer ausgelegt als die des Rekuperators 250.

Die Einstellung dieses Zustandes erfolgt hierbei vorteilhaft unter Verwendung wenigstens einer der folgenden Zeitkonstanten Z:

- Mit einer elften Zeitkonstante $Z_{11}$ wird vorteilhaft eine Verzögerung der mechanischen Öffnungsgradänderung des Expansionsventils 230 durch die Begrenzung einer Verfahrgeschwindigkeit vorgegeben.

- Eine zwölfte Zeitkonstante $Z_{12}$ wirkt vorteilhaft auf die verzögerte Einstellung eines korrespondierenden Niederdruckes ND bei Öffnungsgradänderungen des Expansionsventils 230 aufgrund der Kompressibilität des Kältemitteldampfes im Niederdruckpfad ND.
- Eine 13. Zeitkonstante $Z_{13}$ ist eine thermische Zeitkonstante der Wärmeübertragungsschicht des Verdampfers. Somit bewirkt eine Änderung des Verdampfungsdruckes und damit der Verdampfungstemperatur eine verzögerte Temperaturänderung der Wärmeübertrageschicht, welche oft mehrere Kilogramm Metall beinhaltet, und des Kältemittels im Niederdruckpfad des Verdampfers 240.
- Eine 14. Zeitkonstante $Z_{14}$ wird vorteilhaft aus verzögerten Aggregatzustandsänderungen des Kältemittels bei Verdampfungstemperaturänderungen ermittelt oder vorgegeben.
- Eine 15. Zeitkonstante $Z_{15}$ ergibt sich vorteilhaft aus dem Transport des Kältemittels durch den Verdampfer 240 mit einer endlichen Strömungsgeschwindigkeit und wird berücksichtigt.

Der niederdruckseitige Kältemittelpfad des Rekuperators 250 wird aus dem Verdampferaustritt 242 des Verdampfers 240 gespeist. Der innere Energiezustand des Kältemittels wird auch hier bereits durch zumindest zwei Zeitkonstanten Z, $Z_{11}$, $Z_{12}$, $Z_{13}$, $Z_{14}$, $Z_{15}$, $Z_{ges}$ nach Änderung der Stellgröße "Öffnungsgrad Expansionsventil" verzögert.

Nach Änderung der Stellgröße "Öffnungsgrad Expansionsventil 230" stellt sich dann eine weitere Verzögerung der korrespondierenden Kältemittelzustandsänderung durch das Zeitverhalten des Rekuperators 250 beim Austritt aus dem niederdruckseitigen Kältemittelpfad des Rekuperators 250 ein.

Das Zeitverhalten des Rekuperators 250 lässt sich vorteilhaft als Rekuperatorgesamt - Zeitkonstante $Z_{ges}$ abhängig vom jeweiligen Arbeitspunkt des Dampfkompressionskreises im Bereich zwischen in etwa 1 Minuten bis 30 Minuten berücksichtigen.

Es erfolgt vorteilhaft eine gewichtete Kombination Verdichtereintrittsüberhitzung $T_{ÜE}$ und der der Verdampferaustrittsüberhitzung $dT_{ÜA}$, indem insbesondere mittels einer gewichteten Kombination der Regelabweichung der Verdichterüberhitzung und der Regelabweichung der Verdampferaustrittsüberhitzung $dT_{ÜA}$ die Gesamtregelabweichung berechnet wird, welche im Regler 500 zur Regelung des Dampfkompressionskreises 200 eingespeist wird.

Die Verdichtereintrittsüberhitzung $dT_{ÜE}$ wird vorteilhaft als Haupt- Regelgröße verwendet und die korrespondierenden Signalflüsse und Signalverarbeitungen erfolgt insbesondere in den folgenden Verfahrensschritten:

Schritt 1

Zunächst werden die Prozessgrößen Verdichtereintrittsüberhitzung $dT_{ÜE}$ vorteilhaft als Hauptregelgröße und die Verdampferaustrittsüberhitzung $dT_{ÜA}$ vorteilhaft als Hilfsgröße in einem ersten Verfahrensschritt messtechnisch erfasst.

Dazu wird jeweils eine Verdampfungstemperatur des Kältemittels am jeweiligen Erfassungspunkt entweder

- direkt messtechnisch ermittelt, mit einem Temperatursensor, welcher so positioniert ist, dass er eine der Kältemitteltemperatur im Nassdampfgebiet entsprechende Temperatur erfasst oder
- indirekt messtechnisch ermittelt, mit einem Drucksensor, welcher einen Kältemitteldruck des im Nassdampfgebiet verdampfenden Kältemittels erfasst und aus der kältemittelspezifischen Abhängigkeit zwischen Druck und Temperatur im Nassdampfgebiet dann die Verdampfungstemperatur berechnet wird.

Des Weiteren wird am jeweiligen dem Überhitzungsmesspunkt, insbesondere am Verdampferausgang 242 und/oder am Verdichtereingang 211 zugeordneten Temperaturen der Kältemitteltemperatur mittels Temperatursensoren 501, 508 erfasst. Es wird dann die Temperaturdifferenz des Kältemittels am jeweiligen Messpunkt und der Verdampfungstemperatur berechnet und dieser Temperaturdifferenzwert entspricht dann der jeweiligen Überhitzung des Kältemittels am Messpunkt.

Ausgangsgrößen der Berechnung in Schritt 1 sind dann die Verdichtereintrittsüberhitzung $dT_{ÜE}$ und die Verdampferaustrittsüberhitzung $dT_{ÜA}$.

Schritt 2

Die Prozessgrößen Verdichtereintrittsüberhitzung $dT_{ÜE}$ und Verdampferaustrittsüberhitzung $dT_{ÜA}$ werden zur Bildung zugeordneter Regelabweichungen mit jeweils zugeordneten Sollwerten in einem zweiten Schritt vorteilhaft verrechnet:

Der Sollwert für die Verdichtereintrittsüberhitzung $dT_{ÜE}$ wird vorteilhaft zur Sicherstellung des zulässigen Verdichtersbetriebsbereiches und eines möglichst hohen Wirkungsgrades des Kältekreises im Bereich zwischen ca. 5 K bis 20 K variiert.

Der Sollwert für die Verdampferaustrittsüberhitzung $dT_{ÜA}$ am Verdampferaustritt 242 wird dann in Abhängigkeit der Kältekreis-Betriebsart und des Kältekreis-Arbeitspunktes so variiert, dass die Verdampferüberhitzung im eingeschwungenen Regelfall in etwa dem sich einstellenden Prozesswert der Verdampferaustrittsüberhitzung $dT_{ÜA}$ entspricht. Dieser Sollwert für die Verdampferaustrittsüberhitzung $dT_{ÜA}$ kann modellbasiert in Abhängigkeit von einer Betriebsart oder einem Arbeitspunkt abhängig von der Verdampfungstemperatur, der Kondensationstemperatur, der Verdichterleistung, einem Sollwert der Verdichtereintrittsüberhitzung $dT_{ÜE}$ am Verdichtereintritt 211 und/oder von Komponenteneigenschaften vorberechnet werden und adaptiv korrigiert werden.

Es wird dann die Regelabweichung der Verdichtereintrittsüberhitzung $dT_{ÜE}$ berechnet, indem vom Prozesswert der Verdichtereintrittsüberhitzung $dT_{ÜE}$ der Sollwert der Verdichtereintrittsüberhitzung $dT_{ÜE}$ subtrahiert wird.

Es wird dann die Regelabweichung der Verdampferaustrittsüberhitzung $dT_{ÜA}$ berechnet, indem vom Prozesswert der Verdampferaustrittsüberhitzung $dT_{ÜA}$ der Sollwert der Verdampferaustrittsüberhitzung $dT_{ÜA}$ subtrahiert wird.

Schritt 3

In einem dritten Verfahrensschritt werden die Regelabweichung der Verdichtereintrittsüberhitzung $dT_{ÜE}$ und die Regelabweichung der Verdampferaustrittsüberhitzung $dT_{ÜA}$ vorteilhaft zu einer Gesamtregelabweichung-Überhitzung kombiniert.

Die Kombination erfolgt insbesondere mittels einer gewichteten Addition der Einzel - Regelabweichungen.

Der Gewichtungseinfluss ist ein Maß für die anteilige Kombination der Einzel - Regelabweichungen und kann im Extremfall die ausschließliche Einbeziehung nur einer Einzel - Regelabweichung, aber üblicherweise die gewichtete Einbeziehung beider Einzel - Regelabweichungen bewirken.

Vorteilhaft wird der Gewichtungseinfluss als Wert zwischen 0 bis 1, also 0 bis 100 % veranschlagt und dieser Wert wird auf den Grad der Einbeziehung der Regelabweichung der Verdichtereintrittsüberhitzung $dT_{ÜE}$ in die Gesamt - Regelabweichung einbezogen, womit sich für die Berechnung der Gesamt - Regelabweichung folgende Abhängigkeit ergibt:

$$\text{Gesamt} - \text{Regelabweichung Überhitzung} =$$

$$(\text{Gewichtungseinfluss} * \text{Regelabweichung Verdichtereintrittsüberhitzung}) +$$

$$((1 - \text{Gewichtungseinfluss}) * \text{Regelabweichung Verdampferaustrittsüberhitzung})$$

Der Wert des Gewichtungseinflusses kann vorteilhaft von der Betriebsart und/oder dem Arbeitspunkt der Wärmepumpe 100 abhängig variiert werden:

- Beim Betriebsartübergang zwischen Betriebsart = Betrieb mit ausgeschaltetem Verdichter 210 und Betriebsart = Betrieb mit eingeschaltetem Verdichter 210 im Heizbetrieb wird aufgrund der dynamischen Prozesswerteänderungen beim Anfahren des Dampfkompressionssystems 200 vorteilhaft ausschließlich zunächst die Regelabweichung Verdampferaustrittsüberhitzung $dT_{ÜA}$ in die Gesamt - Regelabweichung einbezogen, insbesondere ist der Wert eines Gewichtungseinflusses dann zunächst = 0 oder ein Wert vorteilhaft unter 20 %.
- Nach einer Stabilisierungsphase des Dampfkompressionssystems 200 ist es vorteilhaft, nicht spontan auf den für den Regelbetrieb ausgelegten Wert des Gewichtungseinflusses umzuschalten, sondern den Übergang rampenförmig zu gestalten. In diesem Fall ist es vorteilhaft, dass der Wert vom Gewichtungseinfluss vom Startwert = 0, oder einem Wert insbesondere unter 20%, vorteilhaft rampenförmig auf den vorgesehenen Zielwert angehoben werden. Hiermit wird insbesondere eine Werteunstetigkeit bei einem spontanen Umschalten vermieden und somit Regelschwingungen vermieden.
- Der Zielwert des Gewichtungseinflusses wird vorteilhaft an die jeweilige Betriebsart und den Arbeitspunkt angepasst. Betriebspunkte, welche sich durch erhöhte Schwingneigung auszeichnen bedürfen vorteilhaft einer geringeren Gewichtung der Regelabweichung der Verdichtereintrittsüberhitzung $dT_{ÜE}$, insbesondere wird hiermit ein regeltechnisch kritisches Signalverhalten der Verdichtereintrittsüberhitzung $dT_{ÜE}$ aufgrund der gegenüber der Verdampferaustrittsüberhitzung $dT_{ÜA}$ größeren Signalverzögerung und größeren Streckensteilheit eine Schwingneigung vermieden.

Schritt 4:

In einem vierten Verfahrensschritt wird die berechnete Gesamt - Regelabweichung der Überhitzung dann im Regler 500 verarbeitet, welcher die korrespondierenden Aktoren des Kältekreises, insbesondere das Expansionsventil 230 mit dem stellbarem Öffnungsgrad und/oder den Verdichter 210 mit stellbarer Verdichterdrehzahl, so steuert, dass sich im eingeregelten Fall eine Regelabweichung der Überhitzung gleich möglichst etwa 0 Kelvin einstellt.

Dabei kann ein P, I, PI, PID - Regler eingesetzt werden, wobei die Regelanteile an die jeweilige Betriebsart und den Arbeitspunkt vorteilhaft dynamisch angepasst werden.

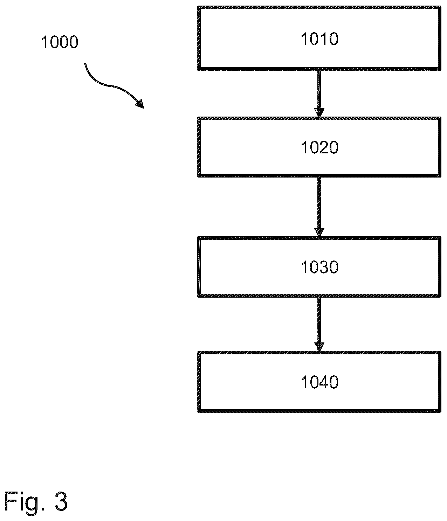

Fig. 3 zeigt schematisch und exemplarisch ein Flussdiagramm eines Verfahrens 1000 zum Regeln einer Kompressionskälteanlage, wie beispielsweise der Kompressionskälteanlage 200 aus Fig. 1.

In einem Schritt 1010 wird eine Ölwurfrate des Verdichters 210 in den Kältekreis als Funktion wenigstens einer Drehzahl des Verdichters 210 bestimmt.

In einem Schritt 1020 wird eine Ölrückführrate aus dem Kältekreis als Funktion wenigstens einer Prozessgröße des Kältekreises bestimmt. Die Prozessgröße ist insbesondere wenigstens eine aus: Niederdruck (ND), Hochdruck (HD), Drehzahl des Verdichters 210, Überhitzung des Kältemittels.

In einem Schritt 1030 wird ein Ölstand aus Ölwurfrate, Ölrückführrate und Betriebsart der Kompressionskälteanlage 200 bewertet.

In Abhängigkeit der Bewertung in Schritt 103 wird in einem Schritt 1040 eine Ölrückführsequenz durchgeführt. Die Ölrückführsequenz wird in dem Fall durchgeführt, in dem der bewertete Ölstand in einem für den Betrieb des Verdichters kritischen Bereich liegt. Vorzugsweise enthält die Ölrückführsequenz eine zeitlich begrenzte Erhöhung eines Sollwertes der Verdichterdrehzahl und/oder der Überhitzung $dT_{ÜE}$ des Kältemittels.

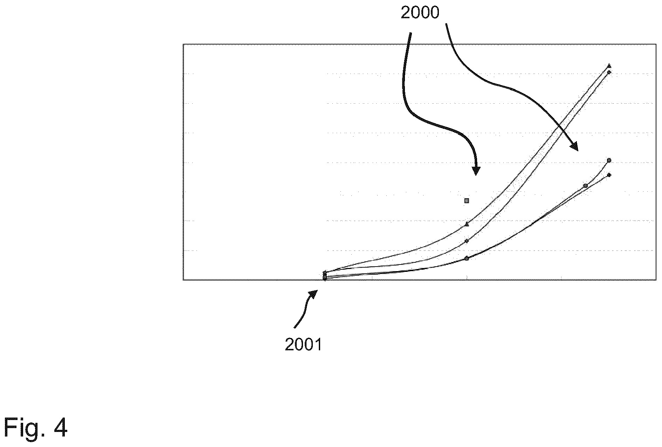

Fig. 4 zeigt schematisch und exemplarisch Ölwurfraten 2000 in der Vertikalen als Funktion der Verdichterdrehzahl in der Horizontalen für verschiedene Typen von Verdichtern. Es kann gesehen werden, dass der Verlauf der Ölwurfraten 2000 unabhängig von dem Verdichtertyp mit der Verdichterdrehzahl ab einem bei beispielsweise 30 Umdrehungen pro Minute liegenden Schwellwert 2001 mit steigender Verdichterdrehzahl ansteigen. Der Anstieg lässt sich beispielsweise mit einer dritten Potenz der Verdichterdrehzahl approximieren.

**Patentansprüche**

1. Verfahren zum Regeln einer Kompressionskälteanlage (200) mit

   - einem Kältekreis, mit

     - einem Kältemittel,
     - einem Verdampfer (240),
     - einem Verdichter (210),
     - einem Verflüssiger (220),
     - einem Drosselorgan (230) und

   - einer Steuereinheit (500)

     a) zur Erfassung einer Überhitzung ($T_{ÜE}$) des Kältemittels bei Eintritt in den Verdichter, wobei die Überhitzung ($T_{ÜE}$) als eine Differenz einer Taupunkttemperatur zu einer Temperatur des Kältemittels definiert ist,
     b) zur Regelung des Drosselorgans (230) basierend auf der Überhitzung ($T_{ÜE}$), und
     c) zur Überwachung und Steuerung einer Ölrückführung zu dem Verdichter (210),

   **dadurch gekennzeichnet, dass** das Verfahren die folgenden Schritte umfasst:

     - Bestimmen einer Ölwurfrate des Verdichters (210) in den Kältekreis als Funktion wenigstens einer Drehzahl des Verdichters (210),
     - Bestimmen einer Ölrückführrate aus dem Kältekreis als Funktion wenigstens einer Prozessgröße des Kältekreises, wobei die Prozessgrö-ßen ausgewählt aus der Liste enthaltend: Niederdruck (ND), Hochdruck (HD), Drehzahl des Verdichters (210), Überhitzung des Kältemittels,
     - Bewertung eines Ölstandes aus Ölwurfrate, Ölrückführrate und Betriebsart der Kompressionskälteanlage (200), und
     - Durchführen einer Ölrückführsequenz in dem Fall, in dem der bewertete Ölstand in einem für den Betrieb des Verdichters kritischen Bereich liegt.

2. Verfahren nach Anspruch 1, wobei die Überhitzung des Kältemittels eine Überhitzung des Kältemittels bei Austritt aus einer ölkritischen Komponente des Kältekreises umfasst, wobei die ölkritische Komponente insbesondere der Verdampfer und/oder ein interner Wärmeübertrager und/oder eine Komponente des Kältekreises umfasst, die einen gegen die Gravitation laufenden Strömungspfad des Kältemittels mit einem einen Schwellwert übersteigenden Innenvolumen enthält.

3. Verfahren nach Anspruch 1 oder 2, wobei
die Ölrückführsequenz wenigstens eines aus

  - einer zeitlich begrenzten Erhöhung eines Sollwertes einer Drehzahl des Verdichters (220) und
  - einer zeitlich begrenzten Reduzierung eines Sollwertes der Überhitzung ($T_{\ddot{U}E}$) des Kältemittels umfasst.

4. Verfahren nach Anspruch 3, wobei

  - die zeitlich begrenzte Reduzierung des Sollwertes der Überhitzung ($T_{\ddot{U}E}$) des Kältemittels derart erfolgt, dass das Kältemittel im Nassdampfgebiet liegt.

5. Verfahren nach Anspruch 3 oder 4, wobei
die zeitlich begrenzte Reduzierung des Sollwertes der Überhitzung ($T_{\ddot{U}E}$) des Kältemittels derart erfolgt, dass das Drosselorgan (230) gegenüber dem Normalbetrieb weiter geöffnet wird.

6. Verfahren nach einem der vorstehenden Ansprüche, wobei die Ölrückführsequenz gegenüber dem Normalbetrieb ein Erhöhen eines Verhältnisses zwischen dem Öffnungsgrad des Drosselorgans (230) und einer Drehzahl des Verdichters (220) umfasst.

7. Verfahren nach einem der vorstehenden Ansprüche, wobei die Bestimmung der Ölwurfrate des Verdichters (210) in den Kältekreis als Funktion wenigstens einer Drehzahl des Verdichters (210) sowie eines Niederdrucks (ND) und eines Hochdrucks (HD) im Kältekreis erfolgt.

8. Verfahren nach einem der vorstehenden Ansprüche, wobei die Betriebsart der Kompressionskälteanlage (200) eine Betriebsart mit eingeschaltetem Verdichter umfasst.

9. Kompressionskälteanlage (200) mit

  - einem Kältemittel,
  - einem Verdampfer (240),
  - einem Verdichter (210),
  - einem Verflüssiger (220),
  - einem Drosselorgan (230) und
  - einer Steuereinheit (500)

  a) zur Erfassung einer Überhitzung ($T_{\ddot{U}E}$) des Kältemittels bei Eintritt in den Verdichter, wobei die Überhitzung ($T_{\ddot{U}E}$) als eine Differenz einer Taupunkttemperatur zu einer Temperatur des Kältemittels definiert ist,
  b) zur Regelung des Drosselorgans (230) basierend auf der Überhitzung ($T_{\ddot{U}E}$), und
  c) zur Überwachung und Steuerung einer Ölrückführung zu dem Verdichter (210),

  **dadurch gekennzeichnet, dass** die Steuereinheit (500) dazu ausgebildet ist:

  - eine Ölwurfrate des Verdichters (210) in den Kältekreis als Funktion wenigstens einer Drehzahl des Verdichters (210) zu bestimmen,
  - eine Ölrückführrate aus dem Kältekreis als Funktion wenigstens einer Prozessgröße des Kältekreises zu bestimmen, wobei die Prozessgrö-ßen ausgewählt aus der Liste enthaltend: Niederdruck (ND), Hochdruck (HD), Drehzahl des Verdichters (210), Überhitzung des Kältemittels,
  - einen Ölstand aus Ölwurfrate, Ölrückführrate und Betriebsart der Kompressionskälteanlage (200) zu bewerten, und
  - eine Ölrückführsequenz in dem Fall, in dem der bewertete Ölstand in einem für den Betrieb des Verdichters kritischen Bereich liegt, durchzuführen.

10. Kompressionskälteanlage nach Anspruch 9, wobei das Kältemittel einen Temperaturglide aufweist, wobei das Kältemittel insbesondere R454C aufweist oder daraus besteht und die Kompressionskälteanlage optional einen internen Wärmeübertrager (250) zur Übertragung von Wärmeenergie des Kältemittels vor Eintritt in das Drosselorgan (230) an das Kältemittel vor Eintritt in den Verdichter (210) enthält.

11. Wärmepumpe (100), insbesondere innen aufgestellte Wärmepumpe (100), mit einer Kompressionskälteanlage (200) gemäß Anspruch 9 oder 10.

**Claims**

1. A method of controlling a compression refrigeration system (200) comprising

   - a refrigerant circuit with

     - a refrigerant,
     - an evaporator (240),
     - a compressor (210),
     - a condenser (220),
     - a throttle valve (230), and

   - a control unit (500)

     a) for detecting one superheating ($T_{ÜE}$) of the refrigerant upon entry into the compressor, superheating ($T_{ÜE}$) being defined as the differential between a dewpoint temperature and a temperature of the refrigerant,
     b) for controlling the throttle valve (230) based on the superheating ($T_{ÜE}$), and
     c) for monitoring and controlling an oil return to the compressor (210),

   **characterised in that** the method comprises the following steps:

     - determining an oil carryover rate of the compressor (210) into the refrigerant circuit as a function of at least one rotational speed of the compressor (210),
     - determining an oil return rate from the refrigerant circuit as a function of at least one process variable of the refrigerant circuit, wherein the process variables are selected from the group including: low pressure (ND), high pressure (HD), speed of the compressor (210), superheating of the refrigerant,
     - assessing an oil level from the oil carryover rate, the oil return rate and the operating mode of the compression refrigeration system (200), and
     - performing an oil return sequence in the case where the assessed oil level is within a critical range for the operation of the compressor.

2. The method according to claim 1, wherein the superheating of the refrigerant comprises one superheating of the refrigerant upon discharge from an oil-critical component of the refrigerant circuit, wherein the oil-critical component comprises in particular the evaporator and/or an internal heat exchanger and/or a component of the refrigerant circuit containing a flow path of the refrigerant opposing gravity and having an internal volume exceeding a threshold.

3. The method according to claim 1 or 2, wherein
   the oil return sequence comprises at least one of

     - a temporary increase of a set value of a speed of the compressor (220), and
     - a temporary reduction of a set value of superheating ($T_{ÜE}$) of the refrigerant.

4. The method according to claim 3, wherein

     - the temporary reduction of the set value of superheating ($T_{ÜE}$) of the refrigerant occurs such that the refrigerant is within the wet steam range.

5. The method according to claim 3 or 4, wherein
   the temporary reduction of the set value of superheating ($T_{ÜE}$) of the refrigerant occurs such that, compared to normal operation, the throttle valve (230) is opened further.

6. The method according to one of the preceding claims, wherein the oil return sequence comprises an increase, compared to normal operation, of a ratio between the opening level of the throttle valve (230) and a speed of the compressor (220).

7. The method according to one of the preceding claims, wherein determining the oil carryover rate of the compressor (210) into the refrigerant circuit occurs as a function of at least one rotational speed of the compressor (210) as well as a low pressure (ND) and a high pressure (HD) in the refrigerant circuit.

8. The method according to one of the preceding claims, wherein in the operating mode of the compression refrigeration system (200) comprises an operating mode with the compressor turned on.

9. A compression refrigeration system (200) comprising

- a refrigerant,
- an evaporator (240),
- a compressor (210),
- a condenser (220),
- a throttle valve (230), and
- a control unit (500)

a) for detecting one superheating ($T_{ÜE}$) of the refrigerant upon entry into the compressor, superheating ($T_{ÜE}$) being defined as the differential between a dewpoint temperature and a temperature of the refrigerant,
b) for controlling the throttle valve (230) based on the superheating ($T_{ÜE}$), and
c) for monitoring and controlling an oil return to the compressor (210),

**characterised in that** the control unit (500) is configured to:

- determine an oil carryover rate of the compressor (210) into the refrigerant circuit as a function of at least one rotational speed of the compressor (210),
- determine an oil return rate from the refrigerant circuit as a function of at least one process variable of the refrigerant circuit, wherein the process variables are selected from the group including: low pressure (ND), high pressure (HD), speed of the compressor (210), superheating of the refrigerant,
- assess an oil level from the oil carryover rate, the oil return rate and the operating mode of the compression refrigeration system (200), and
- perform an oil return sequence in the case in which the assessed oil level is within a critical range for the operation of the compressor.

10. The compression refrigeration system according to claim 9, wherein the refrigerant has a temperature glide, wherein the refrigerant in particular comprising or consisting of R454C, and the compression refrigeration system optionally includes an internal heat exchanger (250) for transferring thermal energy of the refrigerant upstream of entry into the throttle valve (230) to the refrigerant upstream of entry into the compressor (210).

11. A heat pump (100), in particular an indoor heat pump (100), comprising a compression refrigeration system (200) according to claim 9 or 10.

**Revendications**

1. Procédé de régulation d'une installation de réfrigération à compression (200) comportant

- un circuit frigorifique, comportant

- un fluide frigorigène,
- un évaporateur (240),
- un compresseur (210),
- un condenseur (220),
- un organe d'étranglement (230), et

- une unité de commande (500) destinée à

a) détecter une surchauffe ($T_{ÜE}$) du fluide frigorigène à son entrée dans le compresseur, la surchauffe ($T_{ÜE}$) étant définie comme différence entre la température du point de rosée et la température du fluide frigorigène,

b) réguler l'organe d'étranglement (230) en fonction de la surchauffe ($T_{ÜE}$) et
c) surveiller et commander un retour d'huile vers le compresseur (210),

**caractérisé en ce que** le procédé comprend les étapes suivantes :

- détermination d'un taux d'éjection d'huile du compresseur (210) dans le circuit frigorifique en fonction au moins d'un régime du compresseur (210),
- détermination d'un taux de retour d'huile issu du circuit frigorifique en fonction d'au moins une grandeur de processus du circuit frigorifique, les grandeurs de processus étant sélectionnées dans la liste comprenant : basse pression (ND), haute pression (HD), régime du compresseur (210), surchauffe du fluide frigorigène,
- évaluation d'un niveau d'huile à partir du taux d'éjection d'huile, du taux de retour d'huile et du mode de fonctionnement de l'installation de réfrigération à compression (200) et
- exécution d'une séquence de retour d'huile dans le cas où le niveau d'huile évalué se situe dans une plage critique pour le fonctionnement du compresseur.

2. Procédé selon la revendication 1, dans lequel la surchauffe du fluide frigorigène comprend une surchauffe du fluide frigorigène à sa sortie d'un composant essentiel pour l'huile du circuit frigorifique, le composant essentiel pour l'huile comprenant en particulier l'évaporateur et/ou un échangeur de chaleur interne et/ou un composant du circuit frigorifique qui présente un chemin d'écoulement du fluide frigorigène allant à l'encontre de la gravité avec un volume intérieur qui dépasse une valeur seuil.

3. Procédé selon la revendication 1 ou 2, dans lequel
la séquence de retour d'huile comprend

- une augmentation limitée dans le temps d'une valeur de consigne de régime du compresseur (220) et/ou
- une réduction limitée dans le temps d'une valeur de consigne de surchauffe ($T_{ÜE}$) du fluide frigorigène.

4. Procédé selon la revendication 3, dans lequel

- la réduction limitée dans le temps de la valeur de consigne de la surchauffe ($T_{ÜE}$) du fluide frigorigène est effectuée de telle manière que le fluide frigorigène se trouve dans le domaine de la vapeur humide.

5. Procédé selon la revendication 3 ou 4, dans lequel
la réduction limitée dans le temps de la valeur de consigne de la surchauffe ($T_{ÜE}$) du fluide frigorigène est effectuée de telle manière que l'organe d'étranglement (230) est ouvert davantage par rapport au fonctionnement normal.

6. Procédé selon l'une quelconque des revendications précédentes, dans lequel la séquence de retour d'huile comprend une augmentation du rapport entre le degré d'ouverture de l'organe d'étranglement (230) et un régime du compresseur (220) par rapport au fonctionnement normal.

7. Procédé selon l'une quelconque des revendications précédentes, dans lequel la détermination du taux d'éjection d'huile du compresseur (210) dans le circuit frigorifique est effectuée en fonction au moins d'un régime du compresseur (210) ainsi que d'une basse pression (ND) et d'une haute pression (HD) dans le circuit frigorifique.

8. Procédé selon l'une quelconque des revendications précédentes, dans lequel le mode de fonctionnement de l'installation de réfrigération à compression (200) comprend un mode de fonctionnement avec compresseur activé.

9. Installation de réfrigération à compression (200) comportant

- un fluide frigorigène,
- un évaporateur (240),
- un compresseur (210),
- un condenseur (220),
- un organe d'étranglement (230) et
- une unité de commande (500) destinée à

a) détecter une surchauffe ($T_{ÜE}$) du fluide frigorigène à son entrée dans le compresseur, la surchauffe ($T_{ÜE}$) étant définie comme différence entre la température du point de rosée et la température du fluide frigorigène,

b) réguler l'organe d'étranglement (230) en fonction de la surchauffe ($T_{\ddot{U}E}$) et

c) surveiller et commander un retour d'huile vers le compresseur (210),

**caractérisée en ce que** l'unité de commande (500) est conçue pour :

- déterminer un taux d'éjection d'huile du compresseur (210) dans le circuit frigorifique en fonction au moins d'un régime du compresseur (210),
- déterminer un taux de retour d'huile issu du circuit frigorifique en fonction d'au moins une grandeur de processus du circuit frigorifique, les grandeurs de processus étant sélectionnées dans la liste comprenant : basse pression (ND), haute pression (HD), régime du compresseur (210), surchauffe du fluide frigorigène,
- évaluer un niveau d'huile à partir du taux d'éjection d'huile, du taux de retour d'huile et du mode de fonctionnement de l'installation de réfrigération à compression (200) et
- exécuter une séquence de retour d'huile dans le cas où le niveau d'huile évalué se situe dans une plage critique pour le fonctionnement du compresseur.

10. Installation de réfrigération à compression selon la revendication 9, dans laquelle le fluide frigorigène présente un glissement de température, le fluide frigorigène comportant en particulier du R454C ou étant constitué de R454C et l'installation de réfrigération à compression comportant en option un échangeur de chaleur (250) interne destiné à transmettre de l'énergie thermique du fluide frigorigène, avant son entrée dans l'organe d'étranglement (230), au fluide frigorigène avant son entrée dans le compresseur (210).

11. Pompe à chaleur (100), en particulier pompe à chaleur (100) installée à l'intérieur, comportant une installation de réfrigération à compression (200) selon la revendication 9 ou 10.

Fig. 1

Fig. 2

1000

```
┌─────────────────────┐
│        1010         │
└─────────────────────┘
           │
           ▼
┌─────────────────────┐
│        1020         │
└─────────────────────┘
           │
           ▼
┌─────────────────────┐
│        1030         │
└─────────────────────┘
           │
           ▼
┌─────────────────────┐
│        1040         │
└─────────────────────┘
```

Fig. 3

EP 3 922 929 B1

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1493978 A1
- US 2020132346 A1
- EP 3051235 A1
- DE 10159892 A1
- DE 102005061480 B3